(19) Europäisches Patentamt
European Patent Office
Office européen des brevets

(11) EP 2 152 760 B1

(12) **EUROPÄISCHE PATENTSCHRIFT**

(45) Veröffentlichungstag und Bekanntmachung des Hinweises auf die Patenterteilung:
**04.05.2011 Patentblatt 2011/18**

(21) Anmeldenummer: **08759716.7**

(22) Anmeldetag: **19.05.2008**

(51) Int Cl.:
***C08F 236/12*** (2006.01) ***C08C 1/15*** (2006.01)
***C08F 2/22*** (2006.01) ***C08K 5/37*** (2006.01)
***C08L 9/02*** (2006.01)

(86) Internationale Anmeldenummer:
**PCT/EP2008/056086**

(87) Internationale Veröffentlichungsnummer:
**WO 2008/142035 (27.11.2008 Gazette 2008/48)**

(54) **NITRILKAUTSCHUKE**

NITRILE RUBBERS

CAOUTCHOUCS NITRILE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **22.05.2007 DE 102007024008**

(43) Veröffentlichungstag der Anmeldung:
**17.02.2010 Patentblatt 2010/07**

(73) Patentinhaber: **LANXESS Deutschland GmbH**
**51369 Leverkusen (DE)**

(72) Erfinder: **OBRECHT, Werner**
**47447 Moers (DE)**

(56) Entgegenhaltungen:
**EP-A- 0 692 496**
**EP-A- 0 779 300**
**EP-A- 0 779 301**
**JP-A- 7 316 128**
**JP-A- 8 073 538**
**US-A1- 2003 171 518**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 152 760 B1

Printed by Jouve, 75001 PARIS (FR)

## Beschreibung

Die Erfindung betrifft einen Nitrilkautschuk, ein Verfahren zu dessen Herstellung, vulkanisierbare Mischungen auf Basis dieses Nitrilkautschuks, ferner ein Verfahren zur Herstellung von Vulkanisaten aus diesen Mischungen sowie die dabei erhaltenen Vulkanisate.

Unter Nitrilkautschuken, abgekürzt auch als "NBR" bezeichnet, werden Kautschuke verstanden, bei denen es sich um Co- oder Terpolymere aus mindestens einem $\alpha,\beta$-ungesättigten Nitril, mindestens einem konjugierten Dien und gegebenenfalls einem oder mehreren weiteren copolymerisierbaren Monomeren handelt.

Problematisch ist häufig die Lagerstabilität solcher Nitrilkautschuke. Lagerstabil bedeutet dabei, dass sich die Mooney-Viskosität als wichtiges Spezifikationskriterium der Nitrilkautschuke bei langen Lagerzeiten und insbesondere auch bei höheren Temperaturen, wie sie im Sommer vorkommen können, möglichst wenig ändert.

Nitrilkautschuke und Verfahren zur Herstellung solcher Nitrilkautschuke sind bekannt, siehe z.B. W. Hofmann, Rubber Chem. Technol. 36 (1963) 1 und Ullmann's Encyclopedia of Industrial Chemistry, VCH Verlagsgesellschaft, Weinheim, 1993, S. 255-261. In diesen Publikationen findet sich kein Hinweis, ob und gegebenenfalls wie man die Lagerstabilität von Nitrilkautschuken verbessern kann.

JP 75,105,746 beschreibt hitzebeständige Nitrilkautschuke, die erhalten werden, indem man die Latex-Koagulation mit einer Mischung von Zinndichlorid und Calciumchlorid durchführt. Pro 100 Gewichts-Teile Calciumchlorid werden dabei 50 Gew. Teile Zinndichlorid eingesetzt. Die Verwendung von Zinnsalzen ist heute aus ökologischen Gründen problematisch, zumal sich diese Zinnsalze selbst bei einer umfangreichen nachfolgenden Wäsche des Nitrilkautschuks im Nitrilkautschuk finden lassen. Auch die Entfernung der Zinnsalze aus dem Waschwasser ist mit einem hohen und daher-ebenso unerwünschten Reinigungsaufwand verbunden.

Aus JP 76/26,790 ist es bekannt, einen Nitrilkautschuk Latex unter Einsatz von Strontiumchlorid zu koagulieren, wobei ein koagulierter Nitrilkautschuk mit einem Strontium-Gehalt von 1,2% resultiert. Es wird ausgeführt, dass ein Formteil, welches auf Basis eines solchen Nitrilkautschuks hergestellt wurde, über deutlich bessere Eigenschaften verfügt als ein entsprechendes Formteil auf Basis eines Nitrilkautschuks, der aus dem Latex durch Koagulation mit Calciumchlorid erhalten wurde.

Gemäß Angew. Makromol. Chem. 1986, 145-146, 161-179 besteht eine äußerst wirksame Massnahme zur Verbesserung der Lagerstabilität von Nitrilkautschuk in einer selektiven Hydrierung der vom Butadien stammenden Doppelbindungen bei gleichzeitigem Erhalt der Dreifachbindungen der Nitrilgruppen. Für viele Anwendungen sind die durch die Hydrierung erzielten Eigenschaftsänderungen erwünscht, jedoch nicht für alle. Die Hydrierung ist zudem aufwändig und erfordert eine Reihe zusätzlicher Verfahrensschritte. Außerdem werden durch die Hydrierung die Glastemperaturen im Vergleich zum nicht hydrierten Ausgangsprodukt verschlechtert. Aus diesem Grund stellt die Hydrierung nicht für alle Anwendungen eine geeignete Lösung des Problems dar.

NBR wird durch Emulsionspolymerisation hergestellt, wobei zunächst ein **NBR**-Latex erhalten wird. Der NBR-Feststoff wird aus diesem Latex durch Koagulation isoliert. Für die Koagulation werden Salze und Säuren verwendet. Über die Koagulation von Latices mit Metallsalzen ist bekannt, dass von einwertigen Metallionen, z.B. in Form von Natriumchlorid, deutlich größere Elektrolytmengen benötigt werden als von mehrwertigen Metallionen, z.B. in Form von Calciumchlorid, Magnesiumchlorid oder Aluminiumsulfat **(**Kolloid-Z. 154, 154 (1957**)).** Aus Houben -Weyl (1961), Methoden der Org. Chemie, Makromolekulare Stoffe 1, S. 484 ist es ferner bekannt, dass der Einsatz mehrwertiger Metallionen zu "einem mehr oder weniger großen Einschluss des Emulgators im Produkt" führt. Gemäß Houben-Weyl (1961), Methoden der Org. Chemie, Makromolekulare Stoffe 1, S. 479 "müssen nicht nur die benutzten Elektrolyte sehr sorgfältig wieder ausgewaschen werden, sondern das Fertigprodukt soll auch frei von den Katalysatoren und Emulgatoren des Ansatzes sein. Schon geringe Reste von Elektrolyten ergeben trübe und wolkige Press- und Spritzstücke, verderben die elektrischen Eigenschaften und erhöhen das Wasseraufnahmevermögen des Fertigprodukts" (Zitat). Im Houben-Weyl findet sich jedoch kein Hinweis, ob und in welcher Weise die Aufarbeitung des Latex dessen Lagerstabilität beeinflusst.

Aus DD 154 702 ist ein Verfahren zur radikalischen Copolymerisation von Butadien und Acrylnitril in Emulsion bekannt, das über ein spezielles, zweckmäßigerweise computergestütztes Dosierprogramm für die Monomere sowie den Molekulargewichtsregler, wie z.B. tert.-Dodecylmercaptan, gesteuert wird und bei dem die erhaltenen Latices durch Koagulation im sauren Medium zum Festkautschuk aufgearbeitet werden. Als wesentlicher Vorteil des Verfahrens wird ausgeführt, dass die als Emulgatoren eingesetzten Harz- und/oder Fettsäureseifen durch die Verwendung von Säuren bei der Koagulation im Kautschuk verbleiben, also nicht wie bei anderen Verfahren ausgewaschen werden. Hierfür wird neben dem Vorteil guter Eigenschaften des NBR besonders die Verbesserung der Ökonomie des Verfahrens und die Vermeidung der Abwasserbelastung durch ausgewaschenen Emulgator reklamiert. Für die erhaltenen Butadien-Acrylnitril-Copolymerisate mit 10-30 Gew.% Acrylnitril wird ausgeführt, dass sie sich durch gute Elastizitäts- und Tieftemperatur-Eigenschaften kombiniert mit einer erhöhten Quellbeständigkeit und eine vorteilhafte Verarbeitbarkeit auszeichnen. Maßnahmen, durch die eine Beeinflussung der Lagerstabilität des Nitrilkautschuks möglich ist, können der Lehre dieses Patents nicht entnommen werden.

Aus JP 27902/73 (Appl. 69 32,322) ist bekannt, dass durch die Verwendung von Aminen bei der Koagulation von Latices mit Magnesiumsalzen, beispielsweise durch Kombination von Diethylentriamin und Magnesiumchlorid, die Anvulkanisationsgeschwindigkeit reduziert und somit die Scorchbeständigkeit von Nitrilkautschuken verbessert werden kann. Es finden sich aber keinerlei Hinweise dazu, wie lagerstabile Nitrilkautschuke erhalten werden können.

Aus der DE-OS 23 32 096 ist es bekannt, dass Kautschuke aus ihren wässrigen Dispersionen mit Hilfe von Methylcellulose und einem wasserlöslichen Alkali-, Erdalkali-, Aluminium- oder Zinksalz ausgefällt werden können. Als bevorzugtes wasserlösliches Salz wird Natriumchlorid eingesetzt. Als Vorteil dieses Verfahrens wird beschrieben, dass ein Koagulat erhalten wird, welches von Fremdbestandteilen, wie Emulgatoren, Katalysatorresten und dergleichen fast vollständig frei ist, da diese Fremdstoffe zusammen mit dem Wasser beim Abtrennen des Koagulats entfernt und etwa noch verbleibende Reste mit weiterem Wasser vollständig ausgewaschen werden. Aussagen zur Lagerstabilität derart hergestellter Kautschuke werden nicht getroffen. In DE-OS 24 25 441 werden bei der Elektrolytkoagulation von Kautschuklatices als Hilfsmittel statt der Methylcellulose 0,1-10 Gew.% (bezogen auf den Kautschuk) wasserlösliche $C_2$-$C_4$ Alkylcellulosen oder Hydroxyalkylcellulosen in Kombination mit 0,02 bis 10 Gew.% (bezogen auf den Kautschuk) eines wasserlöslischen Alkali-, Erdalkali-, Aluminium- oder Zinksalzes verwendet. Auch hier wird als bevorzugtes wasserlösliches Salz Natriumchlorid eingesetzt. Das Koagulat wird mechanisch abgetrennt, gegebenenfalls mit Wasser gewaschen und das restliche Wasser entzogen. Auch hier wird ausgeführt, dass die Fremdstoffe wie in der DE-OS 23 32 096 zusammen mit dem Wasser beim Abtrennen des Koagulats faktisch vollständig entfernt werden, und etwa noch verbleibende Reste durch das Waschen mit weiterem Wasser vollständig ausgewaschen werden.

In DE-OS 27 51 786 wird festgestellt, dass die Ausfällung und Isolierung von Kautschuken aus ihren wässrigen Dispersionen mit einer geringeren Menge an (Hydroxy)Alkylcellulose durchgeführt werden kann, wenn 0,02 bis 0,25 Gew.% eines wasserlöslichen Calciumsalzes eingesetzt werden. Es wird wiederum als Vorteil beschrieben, dass nach diesem Verfahren ein extrem reines Koagulat erhalten wird, welches von Fremdbestandteilen, wie Emulgatoren, Katalysatorresten und dergleichen faktisch vollständig frei ist. Diese Fremdstoffe werden zusammen mit dem Wasser beim Abtrennen des Koagulats entfernt und etwa noch verbleibende Reste können mit Wasser ausgewaschen werden. Es wird ferner ausgeführt, dass die Eigenschaften der isolierten Kautschuke nicht nachteilig dadurch beeinflusst werden, dass mit einem Calcium-Salz koaguliert wird. Man erhalte vielmehr einen Kautschuk, bei dem die Vulkanisationeigenschaften nicht beeinträchtigt und voll zufriedenstellend seien. Dies wird als überraschend dargestellt, da eine Beeinträchtigung der Kautschukeigenschaften häufig zu beobachten sei, wenn Polymere aus Dispersionen mit Hilfe mehrwertiger Metallionen wie Calcium- oder Aluminium-Ionen ausgefällt würden. Als Beleg für die letztere Aussage wird Houben-Weyl (1961), Methoden der Org. Chemie, Makromolekulare Stoffe 1, S. 484/485 herangezogen. Die Kautschuke der DE-OS 27 51 786 wiesen demgegenüber keinerlei Verzögerung oder Verschlechterung z.B. bei der Anvulkanisation und/oder Ausvulkanisation auf.

Keiner der Schriften DE-OS 23 32 096**,** DE-OS 24 25 441 und DE-OS 27 51 786 ist zu entnehmen, welche Maßnahmen zwecks Erreichen einer hohen Lagerstabilität von Nitrilkautschuken getroffen werden müssen.

Wie bei den zuvor beschriebenen Patenten ist es auch das Ziel der DE-OS 30 43 688**,** die für die Latexkoagulation nötigen Elektrolytmengen möglichst stark zu reduzieren. Dies wird gemäß der Lehre von DE-OS 30 43 688 erreicht, indem man bei der Elektrolytkoagulation von Latices neben dem anorganischen Coagulans als Hilfsmittel entweder auf Pflanzen zurückgehende proteinartige Materialien oder Polysaccharide wie z.B. Stärke und gegebenenfalls wasserlösliche Polyaminverbindungen verwendet. Als anorganische Coagulantien werden bevorzugt Alkalimetall- oder Erdalkalimetallsalze beschrieben. Durch die speziellen Additive gelingt eine Reduktion der für eine quantitative Latexkoagulation notwendigen Salzmengen. Aus DE-OS 3 043 688 sind keine Hinweise zu entnehmen, wie durch die Herstellung und/oder Aufarbeitung des Nitrilkautschuks eine Verbesserung der Lagerstabilität erreicht werden kann.

In der US-A-4,920,176 wird beschrieben und durch experimentelle Daten belegt, dass bei Koagulation eines Nitrilkautschuk-Latex mit anorganischen Salzen wie beispielsweise Natriumchlorid oder Calciumchlorid sehr hohe Natrium-, Kalium- und Calcium-Gehalte und ferner auch Emulgatoren im Nitrilkautschuk verbleiben. Dies ist jedoch unerwünscht und zwecks Erhalt eines möglichst reinen Nitrilkautschuks werden gemäß der Lehre von US-A-4,920,176 bei der Koagulation von Nitrilkautschuk-Latices anstelle der anorganischen Salze wasserlösliche kationische Polymere eingesetzt. Hierbei handelt es sich beispielsweise um solche auf der Basis von Epichlorhydrin und Dimethylamin. Durch diese Hilfsmittel wird das Ziel angestrebt, die im Produkt verbleibenden Salzmengen signifikant zu reduzieren. Die daraus erhaltenen Vulkanisate weisen eine niedrigere Quellung bei Wasserlagerung sowie einen höheren elektrischen Widerstand auf. In der Patentschrift werden die genannten Eigenschaftsverbesserungen rein qualitativ auf die minimalen, im Produkt verbleibenden Kationengehalte zurückgeführt. Eine weitergehende Erklärung der beobachteten Phänomene wird nicht gegeben. Auch wird in US-A-4,920,176 keinerlei Aussage getroffen, ob und wie durch Herstellung und Aufarbeitung des Nitrilkautschuks die Lagerstabilität gesteuert werden können.

Das Ziel der EP-A-1 369 436 besteht darin, Nitrilkautschuke mit hoher Reinheit bereitzustellen. Das Verfahren der EP-A-1 369 436 geht von typischen Nitrilkautschuken aus. Über das Polymerisationsverfahren wird nichts ausgeführt, außer dass eine Emulsionspolymerisation in Gegenwart von Fettsäure- und/oder Harzsäuresalzen als Emulgatoren durchgeführt wird. Daran schließt sich die Latexkoagulation mit Säuren an, gegebenenfalls unter Zugabe von Fällungsmitteln. Als Säuren können alle mineralischen und organischen Säuren verwendet werden, die es gestatten, die gewünschten pH-Werte einzustellen. Daneben können zusätzliche Fällungsmittel eingesetzt werden, genannt werden hierfür Alkalisalze von anorganischen Säuren wie z.B. Natriumchlorid und Natriumsulfat. Anschließend werden die durch die Säureeinwirkung entstandenen Fett- und Harzsäuren mit wässrigen Alkalihydroxidlösungen ausgewaschen und das Polymer abschließend einer Scherung unterworfen, bis sich eine Restfeuchte von kleiner gleich 20 % einstellt. Im Rahmen dieser Scherung wird das Wasser bzw. die Restfeuche einschließlich der darin enthaltenen Ionengehalte sowie sonstiger Fremdstoffe entfernt. Die in den Beispielen 1 und 2 offenbarten Ca-Gehalte der Produkte liegen bei nur 4 bzw. 2 ppm. Die EP-A-1 369 436 liefert keine Hinweise zur Herstellung von Nitrilkautschuken, die eine erhöhte Lagerstabilität aufweisen.

In EP-A-0 692 496, EP-A-0 779 301 und EP-A-0 779 300 werden jeweils Nitrilkautschuke auf Basis eines ungesättigten Nitrils und eines konjugierten Diens beschrieben. Gemeinsam ist allen Nitrilkautschuken, dass sie 10-60 Gew.% ungesättigtes Nitril und eine Mooney-Viskosität im Bereich von 15-150 bzw. gemäß EP-A-0 692 496 von 15-65 besitzen und alle mindestens 0,03 mol einer $C_{12}$-$C_{16}$-Alkylthio-Gruppe pro 100 mol Monomer-Einheiten aufweisen, wobei diese Alkylthiogruppe mindestens drei tertiäre C-Atome einschließt und ein Schwefel-Atom, das direkt an mindestens eines der tertiären C-Atome gebunden ist. Die Herstellung der Nitrilkautschuke erfolgt jeweils in Gegenwart eines entsprechend aufgebauten $C_{12}$-$C_{16}$-Alkylthiols als Molekulargewichtsregler, der als "Chain transfer agent" fungiert und somit als Endgruppe in die Polymerketten eingebaut wird.

Für die Nitrilkautschuke gemäß EP-A-0 779 300 wird ausgeführt, dass sie eine Breite "ΔAN" (AN = ungesättigtes Nitril) der Zusammensetzungsverteilung des ungesättigten Nitrils im Copolymer im Bereich von 3 bis 20 besitzen. Das Verfahren zu ihrer Herstellung unterscheidet sich von dem der EP-A-0 692 496 dadurch, dass nur 30-80 Gew.% der gesamten Monomermenge zu Polymerisationsbeginn eingesetzt werden und die restliche Monomermenge erst bei einem Umsatz der Polymerisation von 20-70 Gew.% zudosiert wird.

Für die Nitrilkautschuke gemäß EP-A-0 779 301 wird ausgeführt, dass sie 3-20 Gew.% einer Fraktion mit niedrigem Molekulargewicht mit einem zahlenmittleren Molekulargewicht $M_n$ kleiner 35.000 aufweisen. Das Verfahren zu ihrer Herstellung unterscheidet sich von dem der EP-A-0 692 496 dadurch, dass nur 10-95 Gew.% des Alkylthiols vor der Polymerisation in das Monomerengemisch eingemischt werden und die restliche Menge des Alkylthiols erst bei Erreichen eines Polymerisationsumsatzes von 20-70 Gew.% zudosiert wird.

Im Hinblick auf die Latex-Koagulation wird in allen drei Patentanmeldungen EP-A-0 692 496, EP-A-0 779 301 und EP-A-0 779 300 offenbart, dass beliebige Coagulantien eingesetzt werden können. Als anorganische Coagulantien werden Calciumchlorid und Aluminiumchlorid erwähnt und eingesetzt. Der Fokus liegt auf Nitrilkautschuken, die im wesentlichen halogenfrei sind und erhalten wird, indem die Latex-Koagulation in Gegenwart eines nichtionischen oberflächenaktiven Hilfsmittels und unter Verwendung von halogen-freien Metallsalzen wie Aluminiumsulfat, Magnesiumsulfat und Natriumsulfat durchgeführt wird. Als bevorzugt wird die Koagulation unter Einsatz von Aluminiumsulfat oder Magnesiumsulfat angegeben. Der dabei erhaltene, im wesentliche halogenfreie Nitrilkautschuk besitzt einen Halogengehalt von maximal 3 ppm.

In Vergleichsbeispiel 6 der EP-A-779 300 bzw. Vergleichsbeispiel 7 der EP-A-0 779 301 wird die Latexkoagulation mit einer Mischung von NaCl und $CaCl_2$ durchgeführt, wobei das $CaCl_2$ in großen Mengen eingesetzt wird und das Gewichtsverhältnis von NaCl und $CaCl_2$ 1 : 0,75 beträgt. Bezüglich der Scorchzeit und des Spannungswerts bei 100% Dehnung werden im Vergleich zu den anderen in der jeweiligen Tabelle 12 bzw. 13 aufgeführten Beispielen keine signifikanten Unterschiede gefunden.

Für die Herstellung dieser Nitrilkautschuke ist es gemäß EP-A-0 692 496, EP-A-0 779 300 sowie EP-A-0 779 301 essentiell, dass als Molekulargewichtsregler Alkylthiole in Form der Verbindungen 2,2,4,6,6-Pentmethylheptan-4-thiol und 2,2,4,6,6,8,8-Heptamethylnonan-4-thiol eingesetzt werden. Hierbei wird deutlich darauf hingewiesen, dass bei Einsatz des herkömmlichen bekannten tert.-Dodecylmercaptan als Regler Nitrilkautschuke mit schlechteren Eigenschaften erhalten werden.

**2,2,4,6,6-Pentamethylheptanthiol-4**

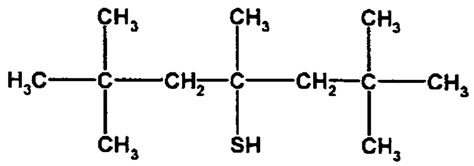

**2,2,4,6,6,8,8-Heptamethylnonanthiol-4**

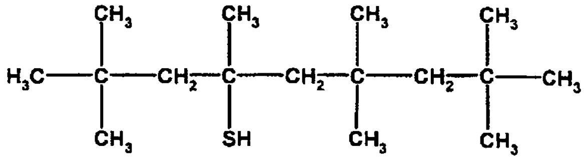

Für die in EP-A-0 692 496, EP-A-0 779 300 sowie EP-A-0 779 301 hergestellten Nitrilkautschuke wird geltend gemacht, dass sie ein vorteilhaftes Eigenschaftsprofil besitzen, eine gute Verarbeitbarkeit der Kautschukmischungen

und eine niedrige Formverschmutzung bei der Verarbeitung ermöglichen. Die erhaltenen Vulkanisate sollen eine gute Kombination von Tieftemperatur- und Ölbeständigkeit besitzen und über gute mechanische Eigenschaften verfügen. Geltend gemacht wird ferner, dass bei der Herstellung der Nitrilkautschuke durch hohe Polymerisationsumsätze von größer 75%, bevorzugt größer 80% eine hohe Produktivität erzielt werden kann und auch die Vulkanisationsgeschwindigkeit bei der Vulkanisation mit Schwefel bzw. Peroxiden hoch ist, insbesondere bei NBR-Typen für die Spritzgussverarbeitung. Es wird ferner ausgeführt, dass die Nitrilkautschuke eine kurze Anvulkanisationszeit aufweisen und eine hohe Vernetzungsdichte. Über die Eigenschaft der Lagerstabilität wird in den genannten Patentanmeldungen keine Aussage gemacht.

Zusammenfassend ist festzustellen, dass bis heute kein Verfahren beschrieben wurde, welches die Synthese von Nitrilkautschuken ermöglicht, die vorhersehbar eine gute Lagerstabilität besitzen.

Die **Aufgabe der vorliegenden Erfindung** bestand somit darin, Nitrilkautschuke zur Verfügung zu stellen, die über eine gute Lagerstabilität verfügen und gleichzeitig unverändert gute Eigenschaften bei der Verarbeitung, d.h. ein gutes Vulkanisationsprofil besitzen.

**Gegenstand der Erfindung** ist ein Nitrilkautschuk, welcher Wiederholungseinheiten mindestens eines α,β-ungesättigten Nitrils, mindestens eines konjugierten Diens und gegebenenfalls eines oder mehrerer weiterer copolymerisierbarer Monomere enthält und der

(i) einen Calcium-Gehalt von mindestens 150 ppm, bezogen auf den Nitrilkautschuk, und einen Chlor-Gehalt von mindestens 40 ppm, bezogen auf den Nitrilkautschuk, aufweist, und

(ii) der 2,2,4,6,6-Pentamethylheptan-4-thio- und/oder 2,4,4,6,6-Pentamethylheptan-2-thio- und/oder 2,3,4,6,6-Pentamethylheptan-2-thio und/oder 2,3,4,6,6-Pentamethylheptan-3-thio-Endgruppen enthält.

Für die Bestimmung des **Calcium-Gehalts** hat sich folgende Methode bewährt und wird im Rahmen dieser Erfindung eingesetzt: Es werden 0,5 g der Nitrilkautschuke durch trockene Veraschung bei 550°C im Platintiegel mit anschliessendem Lösen der Asche in Salzsäure aufgeschlossen. Nach geeigneter Verdünnung der Aufschlusslösung mit deionisiertem Wasser wird der Calcium-Gehalt durch ICP-OES (inductively coupled plasma - optical emission spectrometry) bei einer Wellenlänge von 317,933 nm gegen mit Säurematrix angepasste Kalibrierlösungen bestimmt. Je nach Konzentration der Elemente in der Aufschlusslösung bzw. Empfindlichkeit des verwendeten Messgeräts werden die Konzentrationen der Probelösungen für die jeweils verwendeten Wellenlängen an den linearen Bereich der Kalibrierung angepasst **(**B. Welz "Atomic Absorption Spectrometry", 2nd Ed., Verlag Chemie, Weinheim 1985**)**

Bevorzugt besitzen die erfindungsgemäßen Nitrilkautschuke einen Calcium-Gehalt von mindestens 200 ppm, besonders bevorzugt von mindestens 400 ppm, ganz besonders bevorzugt von mehr als 500 ppm, inbesondere von mindestens 600 ppm und insbesondere bevorzugt von mindestens 800 ppm Calcium, bezogen auf den Nitrilkautschuk.

Überraschenderweise besitzen die erfindungsgemäßen Nitrilkautschuke die gewünschte sehr gute Lagerstabilität und weisen gleichzeitig ein positives Verarbeitungsverhalten auf.

Unter **Lagerstabilität** eines Kautschuks versteht man eine möglichst weitgehende Konstanz des Molekulargewichts bzw. der Mooney-Viskosität über einen längeren Zeitraum und dies insbesondere auch bei höheren Temperaturen.

Man bestimmt die Lagerstabilität üblicherweise, indem man den unvulkanisierten Nitrilkautschuk über einen definierten Zeitraum bei höherer Temperatur lagert (auch als Heißluftlagerung bezeichnet) und die Differenz der Mooney-Viskositäten vor und nach dieser Lagerung bei erhöhter Temperatur bestimmt. Da die Mooney-Viskotät von Nitrilkautschuk üblicherweise bei der Heißluftlagerung zunimmt, erfolgt die Charakterisierung der Lagerstabilität durch die Differenz der Mooney-Viskosität nach Lagerung minus Mooney-Viskosität vor Lagerung.

Die Lagerstabilität ergibt sich somit über die folgende Formel (I)

$$LS = MV2 - MV1 \qquad (I)$$

worin

MV1 den Wert für die Mooney-Viskosität eines Nitrilkautschuks und

MV2 den Wert für die Mooney-Viskosität desselben Nitrilkautschuks nach einer 48 stündigen Lagerung bei 100°C darstellt

Die Bestimmung der Werte für die Mooney-Viskosität (ML 1+4@100°C) erfolgt jeweils mittels eines Scherscheibenviskosimeters nach DIN 53523/3 bzw. ASTM D 1646 bei 100°C.

Es hat sich bewährt, die 48 stündige Lagerung des Nitrilkautschuks bei 100°C in einem Umlufttrockenschrank durchzuführen, wobei der Sauerstoffgehalt in diesem Umlufttrockenschrank gegenüber normaler Luft unverändert ist.

Ausreichend lagerstabil ist ein Nitrilkautschuk, wenn die Lagerstabilität LS maximal 5 Mooney-Einheiten beträgt. Bevorzugt ist LS kleiner 5 Mooney-Einheiten, besonders bevorzugt maximal 4 Mooney-Einheiten.

**Nitrilkautschuk:**

Die erfindungsgemäßen Nitrilkautschuke weisen Wiederholungseinheiten mindestens eines α,β-ungesättigten Nitrils, mindestens eines konjugierten Diens und gegebenenfalls eines oder mehrerer weiterer copolymerisierbarer Monomere auf.

Das konjugierte Dien kann von jeder Natur sein. Bevorzugt werden ($C_4$-$C_6$)-konjugierte Diene eingesetzt. Besonders bevorzugt sind 1,3-Butadien, Isopren, 2,3-Dimethylbutadien, Piperylen, 1,3-Pentadien oder Mischungen daraus. Insbesondere bevorzugt sind 1,3-Butadien und Isopren oder Gemische daraus. Ganz besonders bevorzugt ist 1,3-Butadien.

Als α,β-ungesättigtes Nitril kann jedes bekannte α,β-ungesättigte Nitril eingesetzt werden, bevorzugt sind ($C_3$-$C_5$)-α,β-ungesättigte Nitrile wie Acrylnitril, Methacrylnitril, 1-Chloracrylnitril, Ethacrylnitril oder Mischungen davon. Besonders bevorzugt ist Acrylnitril.

Ein besonders bevorzugter Nitrilkautschuk ist somit ein Copolymer aus Acrylnitril und 1,3-Butadien.

Neben dem konjugierten Dien und dem α,β-ungesättigten Nitril können noch ein oder mehrere weitere copolymerisierbare Monomere eingesetzt werden, z.B. α,β-ungesättigte Mono- oder Dicarbonsäuren, deren Ester oder Amide. Solche Nitrilkautschuke werden üblicherweise auch als carboxylierte Nitrilkautschuke, oder abgekürzt auch als "XNBR" bezeichnet.

Als α,β-ungesättigte Mono- oder Dicarbonsäuren können beispielsweise Fumarsäure, Maleinsäure, Acrylsäure, Methacrylsäure, Crotonsäure und Itakonsäure verwendet werden. Bevorzugt sind dabei Maleinsäure, Acrylsäure, Methacrylsäure und Itakonsäure.

Als Ester der α,β-ungesättigten Carbonsäuren werden beispielsweise Alkylester, Alkoxyalkylester, Hydroxyalkylester oder Mischungen daraus eingesetzt.

Besonders bevorzugte Alkylester der α,β-ungesättigten Carbonsäuren sind Methyl(meth)acrylat, Ethyl(meth) acrylat, Propyl(meth)acrylat, n-Butyl(meth)acrylat, t-Butyl(meth)acrylat, Hexyl(meth)acrylat, 2-Ethlyhexyl(meth)acrylat, Octyl(meth)acrylat und Lauryl(meth)acrylat. Insbesondere wird n-Butylacrylat eingesetzt.

Besonders bevorzugte Alkoxyalkylester der α,β-ungesättigten Carbonsäuren sind Methoxyethyl(meth)acrylat, Ethoxyethyl(meth)acrylat und Methoxyethyl(meth)acrylat. Insbesondere wird Methoxyethylacrylat eingesetzt.

Besonders bevorzugte Hydroxyalkylester der α,β-ungesättigten Carbonsäuren sind Hydroxyethyl(meth)acrylat, Hydroxypropyl-(meth)acrylat und Hydroxy(butyl(meth)acrylat.

Als Ester der α,β-ungesättigten Carbonsäuren werden ferner beispielsweise Polyethylenglykol(meth)acrylat, Polypropylenglykol(meth)acrylat, Glycidyl(meth)acrylat, Epoxy(meth)acrylat und Urethan(meth)acrylat eingesetzt.

Weitere mögliche Monomere sind Vinylaromaten wie Styrol, α-Methylstyrol und Vinylpyridin.

Die Anteile an konjugiertem Dien und α,β-ungesättigtem Nitril in den erfindungsgemäßen Nitrilkautschuken können in weiten Bereichen variieren. Der Anteil des oder der Summe der konjugierten Diene liegt üblicherweise im Bereich von 20 bis 95 Gew.%, bevorzugt im Bereich von 40 bis 90 Gew.-%, besonders bevorzugt im Bereich von 60 bis 85 Gew. %, bezogen auf das Gesamtpolymer. Der Anteil des oder der Summe der α,β-ungesättigten Nitrile liegt üblicherweise bei 5 bis 80 Gew.%, bevorzugt bei 10 bis 60 Gew.-%, besonders bevorzugt bei 15 bis 40 Gew.-%, bezogen auf das Gesamtpolymer. Die Anteile der Monomere summieren sich jeweils zu 100 Gew.-% auf.

Die zusätzlichen Monomere können in Mengen von 0 bis 40 Gew.%, bevorzugt 0,1 bis 40 Gew.-%, besonders bevorzugt 1 bis 30 Gew.-%, bezogen auf das Gesamtpolymer, vorliegen. In diesem Fall werden entsprechende Anteile des oder der konjugierten Diene und/oder des oder der α,β-ungesättigten Nitrile durch die Anteile dieser zusätzlichen Monomere ersetzt, wobei sich die Anteile aller Monomere weiterhin jeweils zu 100 Gew.-% aufsummieren.

Werden als zusätzliche Monomere Ester der (Meth)acrylsäure eingesetzt, so erfolgt dies üblicherweise in Mengen von 1 bis 25 Gew. %.

Werden als zusätzliche Monomere α,β-ungesättigte Mono- oder Dicarbonsäuren eingesetzt, so erfolgt dies üblicherweise in Mengen von weniger als 10 Gew. %.

Der Stickstoffgehalt wird in den erfindungsgemäßen Nitrilkautschuken gemäß DIN 53 625 nach Kjeldahl bestimmt. Aufgrund des Gehalts an polaren Comonomeren sind die Nitrilkautschuke üblicherweise in Methylethylketon bei 20°C $\geq$ 85 Gew. % löslich.

Die Nitrilkautschuke weisen Mooneywerte (ML (1+4 @100°C)) von 10 bis 150, bevorzugt von 20 bis 100 Mooney-Einheiten, besonders bevorzugt von 25 bis 60 Mooney-Einheiten auf. Hierbei handelt es sich um den Wert MV1 im Sinne der Formel (I).

Die Glastemperaturen der Nitrilkautschuke liegen im Bereich -70°C bis +10°C, vorzugsweise im Bereich -60°C bis 0°

Bevorzugt sind erfindungsgemäße Nitrilkautschuke, die Wiederholungseinheiten von Acrylnitril, 1,3-Butadien und gegebenenfalls von einem oder mehreren weiteren copolymerisierbaren Monomeren aufweisen. Ebenso bevorzugt sind Nitrilkautschuke, die Wiederholungseinheiten von Acrylnitril, 1,3-Butadien und einer oder mehreren α,β-ungesättigten Mono- oder Dicarbonsäure, deren Estern oder Amiden aufweisen, und insbesondere Wiederholungseinheiten eines Alkylesters einer α,β-ungesättigten Carbonsäuren, ganz besonders bevorzugt von Methyl(meth)acrylat, Ethyl (meth)acrylat, Propyl(meth)acrylat, n-Butyl(meth)acrylat, t-Butyl(meth)acrylat, Hexyl(meth)acrylat, 2-Ethlyhexyl(meth) acrylat, Octyl(meth)acrylat oder Lauryl(meth)acrylat.

Bevorzugt weist der erfindungsgemäße Nitrilkautschuk 2,2,4,6,6-Pentamethylheptan-4-thio-, 2,4,4,6,6-Pentamethylheptan-2-thio-, 2,3,4,6,6-Pentamethyl-heptan-2-thio und 2,3,4,6,6-Pentamethylheptan-3-thio-Endgruppen auf.

**Gegenstand der vorliegenden Erfindung** ist ferner ein Verfahren zur Herstellung von Nitrilkautschuken durch Emulsionspolymerisation mindestens eines α,β-ungesättigten Nitrils, mindestens eines konjugierten Diens und gegebenenfalls eines oder mehrerer weiterer copolymerisierbarer Monomere, wobei der bei der Polymerisation zunächst anfallende, den Nitrilkautschuk enthaltende Latex einer Koagulation unterworfen und der erhaltene koagulierte Nitrilkautschuk anschließend gewaschen wird, dadurch gekennzeichnet, dass

(i) die Emulsionspolymerisation in Gegenwart eines Gemischs enthaltend 2,2,4,6,6-Pentamethylheptanthiol-4, 2,4,4,6,6-Pentamethylheptanthiol-2, 2,3,4,6,6-Pentamethylheptanthiol-2 und 2,3,4,6,6-Pentamethylheptanthiol-3 durchgeführt wird,
(ii) der nach der Polymerisation anfallende, den Nitrilkautschuk enthaltende Latex einer Koagulation unter Einsatz mindestens eines Salzes ausgewählt aus der Gruppe bestehend aus Aluminium-, Calcium-, Magnesium-, Natrium-, Kalium- und Lithium-Salzen, unterworfen wird,
(iii) entweder bei der Koagulation ein wasserlösliches Calcium-Salz anwesend ist und/oder die Wäsche des koagulierten Nitrilkautschuks mit calciumionenhaltigem Wasser durchgeführt wird und
(iv) entweder bei der Emulsionspolymerisation, bei der Koagulation oder bei der nachfolgenden Wäsche des koagulierten Nitrilkautschuks ein Salz auf Basis eines Chlorids anwesend ist.

**Verfahren zur Herstellung der Nitrilkautschuke**:

Die Herstellung der Nitrilkautschuke erfolgt im erfindungsgemäßen Verfahren durch Emulsionspolymerisation.

Als **Emulgatoren** können wasserlösliche Salze anionischer Emulgatoren oder auch neutrale Emulgatoren eingesetzt werden. Bevorzugt werden anionische Emulgatoren eingesetzt.

Als anionische Emulgatoren können modifizierte Harzsäuren eingesetzt werden, die durch Dimerisierung, Disproportionierung, Hydrierung und Modifikation von Harzsäuregemischen erhalten werden, die Abietinsäure, Neoabietinsäure, Palustrinsäure, Lävopimarsäure enthalten. Eine besonders bevorzugte modifizierte Harzsäure ist die disproportionierte Harzsäure (Ullmann's Encyclopedia of Industrial Chemistry, 6. Auflage, Band 31, S. 345-355).

Als anionische Emulgatoren können auch Fettsäuren eingesetzt werden. Diese enthalten 6 bis 22 C-Atome pro Molekül. Sie können voll gesättigt sein oder auch eine oder mehrere Doppelbindungen im Molekül enthalten. Beispiele für Fettsäuren sind Capronsäure, Laurinsäure, Myristinsäure, Palmitinsäure, Stearinsäure, Ölsäure, Linolsäure, Linolensäure. Die Carbonsäuren basieren üblicherweise auf herkunftsspezifischen Ölen oder Fetten wie z. B. Castoroil, Baumwollsaat, Erdnussöl, Leinsamenöl, Kokosnussfett, Palmkernöl, Olivenöl, Rapsöl, Sojabohnenöl, Fischöl und Rindertalg etc. (Ullmann's Encyclopedia of Industrial Chemistry, 6. Auflage, Band 13, S. 75-108). Bevorzugte Carbonsäuren leiten sich von der Kokosfettsäure und von Rindertalg ab und sind teil- bzw. vollhydriert.

Derartige Carbonsäuren auf Basis modifizierter Harzsäuren bzw. Fettsäuren werden als wasserlösliche Lithium-Natrium, Kalium und Ammoniumsalze verwendet. Die Natrium- und Kaliumsalze sind bevorzugt.

Anionische Emulgatoren sind ferner Sulfonate, Sulfate und Phosphate, die an einen organischen Rest gebunden sind. Als organischer Rest kommen aliphatische, aromatische, alkylierte Aromaten, kondensierte Aromaten, sowie methlyenverbrückte Aromaten infrage, wobei die methlyenverbrückten und kondensierten Aromaten zusätzlich alkyliert sein können. Die Länge der Alkylketten beträgt 6 bis 25 C-Atome. Die Länge der an die Aromaten gebundenen Alkylketten liegt zwischen 3 und 12 C-Atomen.

Die Sulfate, Sulfonate und Phosphate werden als Lithium-, Natrium-, Kalium- und Ammoniumsalze eingesetzt. Die Natrium-, Kalium und Ammoniumsalze sind bevorzugt.

Beispiele für derartige Sulfonate, Sulfate und Phosphate sind Na-Laurylsulfat, Na-Alkylsulfonat, Na-Alkylarylsulfonat, Na-Salze methylenverbrückter Arylsulfonate, Na-Salze alkylierter Naphthalinsulfonate sowie die Na-Salze methlyenverbrückter Napthalinsulfonate, die auch oligomerisiert sein können, wobei der Otigimerisierungsgrad zwischen 2 bis 10 liegt. Üblicherweise liegen die alkylierten Naphthalinsulfonsäuren und die methylenverbrückten (und gegebenenfalls alkylierten) Naphthalinsulfonsäuren als Isomerengemische vor, die auch mehr als 1 Sulfonsäuregruppe (2 bis

3 Sulfonsäuregruppen) im Molekül enthalten können. Besonders bevorzugt sind Na-Laursylsulfat, Na-Alkylsuflonatgemische mit 12 bis 18 C-Atomen, Na-Alkylarylsulfonate, Na-Diisobutylennaphthalinsulfonat, methlyenverbückte Polynaphthalin-sulfonatgemische sowie methylenverbrückte Arylsulfonatgemische.

Neutrale Emulgatoren leiten sich von Additionsprodukten des Ethylenoxids und des Propylenoxids an Verbindungen mit hinreichend acidem Wasserstoff ab. Hierzu gehören beispielsweise Phenol, alkyliertes Phenol und alkylierte Amine. Die mittleren Polymerisationsgrade der Epoxide liegen zwischen 2 bis 20. Beispiele für neutrale Emulgatoren sind ethoxylierte Nonylphenole mit 8, 10 und 12 Ethylenoxideinheiten. Die neutralen Emulgatoren werden üblicherweise nicht alleine, sondern in Kombination mit anionischen Emulgatoren eingesetzt.

Bevorzugt sind die Na- und K-Salze von disproportionierter Abietinsäure und von teilhydrierter Talgfettsäure, sowie Mischungen derselben, Natriumlaurylsulfat, Na-Alkylsulfonate, Natrium-Alkylbenzolsufonat sowie alkylierte und methylenverbrückte Naphthalinsulfonsäuren.

Die Emulgatoren werden in einer Menge von 0,2 bis 15 Gew.-Teile, bevorzugt 0,5 bis 12,5 Gew.-Teile, besonders bevorzugt 1,0 bis 10 Gew.-Teile bezogen auf 100 Gew.-Teile der Monomermischung eingesetzt.

Die Emulsionspolymerisation wird unter Verwendung der genannten Emulgatoren durchgeführt. Falls nach Abschluss der Polymerisation Latices erhalten werden, die aufgrund einer gewissen Instabilität zur vorzeitigen Selbskoagulation neigen, können die genannten Emulgatoren auch zur Nachstabilisierung der Latices verwendet werden. Dies kann insbesondere vor der Entfernung nicht umgesetzter Monomerer durch Behandlung mit Wasserdampf sowie vor einer Latexlagerung notwendig werden.

Das erfindungsgemäße Verfahren wird in Gegenwart eines Gemischs durchgeführt, das

- 2,2,4,6,6-Pentamethylheptanthiol-4,
- 2,4,4,6,6-Pentamethylheptanthiol-2,
- 2,3,4,6,6-Pentamethylheptanthiol-2 und
- 2,3,4,6,6-Pentamethylheptanthiol-3,

enthält. Dieses Gemisch von $C_{12}$-Mercaptanen dient zur Molekulargewichtsregelung des entstehenden Nitrilkautschuks. Eine detaillierte Beschreibung dieses Gemischs und eines Verfahren zu seiner Herstellung findet sich in einer am gleichen Tag eingereichten Anmeldung der Lanxess Deutschland GmbH.

Das zuvor genannte Gemisch zur Molekulargewichtsreglung des Nitrilkautschuks wird in Mengen von 0,05 bis 3 Gew.-Teilen, vorzugsweise von 0,1 bis 1,5 Gew.-Teilen bezogen auf 100 Gew.-Teile der Monomermischung eingesetzt.

Die Dosierung des Gemischs zur Molekulargewichtsreglung erfolgt entweder zu Beginn der Polymerisation oder portionsweise während der Polymerisation, wobei die portionsweise Zugabe sämtlicher sowie einzelner Komponenten der Reglermischung während der Polymerisation bevorzugt ist. Bevorzugt weist der Nitrilkautschuk in diesem Fall 2,2,4,6,6-Pentamethylheptan-4-thio-, 2,4,4,6,6-Pentamethylheptan-2-thio-, 2,3,4,6,6-Pentamethyl-heptan-2-thio und 2,3,4,6,6-Pentamethylheptan-3-thio-Endgruppen auf.

Zur Initiierung der Emulsionspolymerisation werden typischerweise **Polymerisationsinitiatoren** eingesetzt, die in Radikale zerfallen. Hierzu gehören Verbindungen, die eine -O-O- Einheit (PeroxoVerbindungen) oder eine -N≡N-Einheit (Azoverbindung) enthalten.

Zu den Peroxoverbindungen gehören Wasserstoffperoxid, Peroxodisulfate, Peroxodiphosphate, Hydroperoxide, Persäuren, Persäureester, Persäureanhydride und Peroxide mit zwei organischen Resten. Als Salze der Peroxodischwefelsäure und der Peroxodiphosphorsäure können Natrium-, Kalium- und Ammoniumsalze eingesetzt werden. Geeignete Hydroperoxide sind z.B. t-Butylhydroperoxid, Cumolhydroperoxid und p-Menthanhydroperoxid. Geeignete Peroxide mit zwei organischen Resten sind Dibenzoylperoxid, 2,4,-Dichlorbenzoylperoxid, Di-t-Butylperoxid, Dicumylperoxid, t-Butylperbenzoat, t-Butylperacetat etc. Geeignete Azoverbindungen sind Azobisisobutyronitril, Azobisvaleronitril und Azobiscyclohexannitril.

Wasserstoffperoxid, Hydroperoxide, Persäuren, Persäureester, Peroxodisulfat und Peroxodiphosphat werden auch in Kombination mit Reduktionsmitteln eingesetzt. Geeignete Reduktionsmittel sind Sulfenate, Sulfinate, Sulfoxylate, Dithionit, Sulfit, Metabisulfit, Disulfit, Zucker, Harnstoff, Thioharnstoff, Xanthogenate, Thioxanthogenate, Hydraziniumsalzen, Amine und Aminderivate wie Anilin, Dimethylanilin, Monoethanolamin, Diethanolamin oder Triethanolamin. Initiatorsysteme, die aus einem Oxidations- und einem Reduktionsmittel bestehen, bezeichnet man als Redoxsysteme. Bei der Verwendung von Redoxsystemen verwendet man häufig zusätzlich Salze von Übergangsmetallverbindungen wie Eisen, Cobalt oder Nickel in Kombination mit geeigneten Komplexbildnern wie Natrium-Ethylendiamtetraacetat, Natrium-Nitrilotriacetat sowie Trinatriumphosphat oder Tetrakaliumdiphsophat.

Bevorzugte Redoxsysteme sind beispielsweise: 1) Kaliumperoxodisulfat in Kombination mit Triethanolamin, 2) Ammoniumperoxodiphosphat in Kombination mit Natrimmetabisulfit ($Na_2S_2O_5$), 3) p-Menthanhydroperoxid / Natriumformaldehydsulfoxylat in Kombination mit Fe-II-Sulfat ($FeSO_4$*7 $H_2O$), Natrium-Ethylendiaminoacetat und Trinatriumphosphat; 4) Cumolhydroperoxid /Natriumformaldehydsulfoxylat in Kombination mit Fe-II-Sulfat ($FeSO_4$*7 $H_2O$), Natrium-Ethylendiaminoacetat und Tetrakaliumdiphosphat.

Die Menge an Oxidationsmittel beträgt 0,001 bis 1 Gew.-Teile bezogen auf 100 Gew.-Teile Monomer. Die molare Menge an Reduktionsmittel liegt zwischen 50% bis 500% bezogen auf die molare Menge des eingesetzten Oxidationsmittels.

Die molare Menge an Komplexbildner bezieht sich auf die Menge an eingesetztem Übergangsmetall und ist mit diesem üblicherweise äquimolar.

Zur Durchführung der Polymerisation werden sämtliche oder einzelne Komponenten des Initiatorsystems zu Beginn der Polymerisation der Polymerisation oder während der Polymerisation zudosiert.

Die portionsweise Zugabe sämtlicher sowie einzelner Komponenten des Initiatorsystems während der Polymerisation ist bevorzugt. Durch die sequentielle Zugabe lässt sich die Reaktionsgeschwindigkeit steuern.

**Die Polymerisationszeit** liegt im Bereich von 5 h bis 15 h und hängt im Wesentlichen vom Acrylnitrilgehalt der Monomermischung und von der Polymerisationstemperatur ab.

Die **Polymerisationstemperatur** liegt im Bereich von 0 bis 30°C, bevorzugt im Bereich von 5 bis 25°C.

Bei Erreichung von **Umsätzen** im Bereich von 50 bis 90%, vorzugsweise im Bereich von 70 bis 85% wird die Polymerisation abgestoppt.

Hierfür wird dem Reaktionsgemisch ein **Stopper** zugesetzt. Hierfür geeignet sind beispielsweise Dimethyldithiocarbamat, Na-Nitrit, Mischungen von Dimethyldithiocarbamat und Na-Nitrit, Hydrazin und Hydroxylamin sowie hiervon abgeleitete Salze wie Hydraziniumsulfat und Hydroxylammoniumsulfat, Diethylhydroxylamin, Diisopropylhydroxylamin, wasserlösliche Salze des Hydrochinon, Natriumdithionit, Phenyl-$\alpha$-Naphthylamin und aromatische Phenole wie tert-Butylbrenzkatechol, oder Phenothiazin.

Die bei der Emulsionspolymerisation verwendete **Wassermenge** liegt im Bereich von 100 bis 900 Gew,-Teilen, bevorzugt im Bereich von 120 bis 500 Gew.-Teilen, besonders bevorzugt im Bereich von 150 bis 400 Gew.-Teilen Wasser bezogen auf 100 Gew.-Teile der Monomermischung.

Bei der Emulsionspolymerisation können der wässrigen Phase Salze zugesetzt werden, um die Viskosität während der Polymerisation zu verringern, zur pH-Wert Einstellung sowie auch zur pH-Wert Pufferung. Hierfür werden üblicheweise Salze einwertiger Metalle in Form von Kalium- und Natriumhydroxid, Natriumsulfat, Natriumcarbonat, Natriumhydrogencarbonat, Lithiumchlorid, Natriumchlorid und Kaliumchlorid eingesetzt. Bevorzugt sind Natrium- und Kaliumhydroxid, Natriumhydrogencarbonat, Lithium-, Natrium- und Kaliumchlorid. Die Mengen dieser Elektrolyte liegen im Bereich 0 bis 1 Gew.-Teile, vorzugsweise 0 bis 0,5 Gew.-Teile bezogen auf 100 Gew.-Teile der Monomermischung. Der Zusatz eines Chlorid-haltigen Salzes während der Emulsionspolymerisation ist dann erforderlich, wenn weder in der nachfolgenden Koagulation noch in der sich anschließenden Wäsche des koagulierten Nitrilkautschuks ein Chlorid-haltiges Salz eingesetzt werden soll (Merkmal (iv) des erfindungsgemäßen Verfahrens).

Die Polymerisation kann entweder diskontinuierlich oder auch kontinuierlich in einer Rührkesselkaskade durchgeführt werden.

Zur Erzielung eines gleichmäßigen Polymerisationsverlaufs wird für den Start der Polymerisation nur ein Teil des Initiatorsystems verwendet und der Rest während der Polymerisation nachdosiert. Üblicherweise startet man die Polymerisation mit 10 bis 80 Gew. %, vorzugsweise 30-50 Gew. % der Gesamtmenge an Initiator. Auch die Nachdosierung einzelner Bestandteile des Initiatorsystems ist möglich.

Will man chemisch einheitliche Produkte herstellen, werden Acrylnitril bzw. Butadien nachdosiert, wenn die Zusammensetzung außerhalb des azeotropen Butadien/Acrylnitril-Verhältnisses liegt. Vorzugsweise ist eine Nachdosierung bei NBR-Typen mit Acrylnitrilgehalten von 10 bis 34 sowie bei den Typen mit 40 bis 50 Gew.% Acrylnitril (W. Hofmann, Rubber Chem. Technol. 36 (1963) 1) der Fall. Die Nachdosierung erfolgt - wie z.B. in der DD 154 702 angegeben - vorzugsweise computergesteuert auf der Basis eines Rechnerprogramms.

Zur Entfernung nicht umgesetzter Monomere sowie flüchtiger Bestandteile wird der abgestoppte Latex einer Wasserdampfdestillation unterzogen. Hierbei werden Temperaturen im Bereich von 70°C bis 150°C angewandt, wobei bei Temperaturen <100°C der Druck reduziert wird.

Vor der Entfernung der flüchtigen Bestandteile kann eine Nachstabilisierung des Latex mit Emulgator erfolgen. Hierfür verwendet man zweckmäßigerweise die zuvor genannten Emulgatoren in Mengen von 0,1 bis 2,5 Gew. %, vorzugsweise 0,5 bis 2,0 ,Gew. % bezogen auf 100 Gew.-Teile Nitrilkautschuk.

**Latex-Koagulation:**

Vor oder bei der Latexkoagulation können dem Latex ein oder mehrere **Alterungsschutzmittel** zugesetzt werden. Hiefür eigenen sich phenolische, aminische und auch sonstige Alterungsschutzmittel.

Geeignete phenolische Alterungsschutzmittel sind alkylierte Phenole, styrolisiertes Phenol, sterisch gehinderte Phenole wie 2,6-Di-tert.-Butylphenol, 2,6-Di-tert-Butyl-p-Kresol (BHT), 2,6-Di-tert.-Butyl-4-Ethylphenol, estergruppenhaltige sterisch gehinderte Phenole, thioetherhaltige sterisch gehinderte Phenole, 2,2'-Methylen-bis-(4-Methyl-6-tert-Butylphenol) (BPH) sowie sterisch gehinderte Thiobisphenole.

Falls eine Verfärbung des Kautschuks ohne Bedeutung ist, werden auch aminische Alterungsschutzmittel z.

B. Mischungen aus Diaryl-p-phenylendiaminen (DTPD), octyliertes Diphenylamin (ODPA), Phenyl-α-Naphthylamin (PAN), Phenyl-β-Naphthylamin (PBN), vorzugsweise solche auf Phenylendiaminbasis eingesetzt. Beispiele für Phenylendiamine sind N-Isopropyl-N'-phenyl-p-Phenylendiamin, N-1,3-Dimethylbutyl-N'-Phenyl-p-Phenylendiamin (6PPD), N-1,4-Dimethylpentyl-N'-phenylp-Phenylendiamin (7PPD), N,N'-bis-1,4-(1,4-Dimethylpentyl)-p-Phenylendiamin (77PD) etc.

Zu den sonstigen Alterungsschutzmitteln gehören Phosphite wie Tris-(nonylphenyl)phosphit, polymerisiertes 2,2,4-Trimethyl-1,2-dihydrochinolin (TMQ), 2-Mercaptobenzimidazol (MBI), Methyl-2-Mercaptobenzimidazol (MMBI), Zinkmethylmercaptobenzimidazol (ZMMBI). Die Phosphite werden im allgemeinen in Kombination mit phenolischen Alterungsschutzmitteln eingesetzt. TMQ, MBI und MMBI werden vor allem für NBR-Typen verwendet, die peroxidisch vulkanisiert werden.

Für die Koagulation wird der Latex mit einem pH-Wert von mindestens 6, bevorzugt von > 6 eingesetzt. Gegebenenfalls wird dieser pH-Wert durch Zusatz einer Base, bevorzugt von Ammoniak bzw. Natrium- oder Kaliumhydroxid eingestellt.

Die Koagulation wird unter Einsatz mindestens eines Salzes ausgewählt aus der Gruppe bestehend aus Aluminium-, Calcium-, Magnesium-, Natrium-, Kalium- und Lithium-Salzen durchgeführt.

Als Anionen dieser Salze werden üblicherweise ein- oder zweiwertige Anionen eingesetzt. Bevorzugt sind Halogenid, besonders bevorzugt Chlorid, Nitrat, Sulfat, Hydrogencarbonat, Carbonat, Formiat und Acetat.

Geeignet sind beispielsweise Natriumchlorid, Kaliumchlorid, Calciumchlorid, Magnesiumchlorid, Natriumnitrat, Kaliumnitrat, Natriumsulfat, Kaliumsulfat, Natriumhydrogencarbonat, Kaliumhydrogencarbonat, Natriumcarbonat, Kaliumcarbonat, Aluminiumsulfat, Kaliumaluminiumsulfat (Kaliumalaun), Natriumaluminiumsulfat (Natriumalaun), Natriumacetat, Calciumacetat und Calciumformiat.

Wichtig für den speziellen Calcium-Gehalt der erfindungsgemäßen Nitrilkautschuke ist es, dass entweder bei der Latex-Koagulation mindestens ein wasserlösliches Calcium-Salz anwesend ist oder aber - falls dies nicht der Fall ist - die nachfolgende Wäsche des koagulierten Nitrilkautschuks unter Einsatz von nicht-entionisiertem und somit calciumionenhaltigen Wasser durchgeführt wird.

Sofern für die Latex Koagulation ein wasserlösliches Calcium-Salz verwendet wird, ist Calciumchlorid bevorzugt.

Die Konzentration der Lösung eines oder mehrerer Salze ausgewählt aus der Gruppe bestehend aus Aluminium-, Calcium-, Magnesium-, Natrium-, Kalium- und Lithium-Salzen beträgt 3 bis 30 Gew. %. Für die Herstellung der Salzlösung wird vorzugsweise Wasser verwendet, welches Ca-Ionen enthält.

Die für die Latexkoagulation notwendige Gesamtmenge an Salzen ausgewählt aus der Gruppe bestehend aus Aluminium-, Calcium-, Magnesium-, Natrium-, Kalium- und Lithium-Salzen beträgt 0,5 - 200 Gew. %, vorzugsweise 0,8 - 80 Gew. %, besonders bevorzugt 1-50 Gew. % Salz, bezogen auf 100 Gew. Teile Nitrilkautschuk.

Neben mindestens einem Salz ausgewählt aus der oben definierten Gruppe können bei der Koagulation auch **Fällhilfsmittel** eingesetzt werden. Als Fällhilfsmittel kommen beispielsweise wasserlöslichen Polymere in Frage. Diese sind nichtionisch, anionisch oder kationisch.

Beispiele für nichtionische polymere Fällhilfsmittel sind modifizierte Cellulose wie Hydroxyalkylcellulose oder Methylcellulose sowie Addukte von Ethylenoxid und Propylenoxid an Verbindungen mit acidem Wasserstoff. Beispiele für Verbindungen mit acidem Wasserstoff sind: Fettsäure, Zucker wie Sorbit, Mono- und Difettsäuregylceride, Phenol, alkylierte Phenole, (Alkyl)phenol/Formaldehyd-Kondensate etc. Die Additionsprodukte von Ethylenoxid und Propylenoxid an diese Verbindungen können statistisch und blockartig aufgebaut sein. Von diesen Produkten sind solche bevorzugt, bei denen die Löslichkeit mit zunehmender Temperatur abnimmt. Charakteristische Trübungstemperaturen liegen im Bereich 0 bis 100°C, insbesondere im Bereich von 20 bis 70°C.

Beispiele für anionische polymere Fällhilfsmittel sind die Homo- und Copolymeren von (Meth)acrylsäure, Maleinsäure, Maleinsäureanydrid etc. Bevorzugt ist das Na-Salz der Polyacrylsäure.

Kationische polymere Fällhilfsmittel basieren üblichenveise auf Polyaminen sowie auf Homo- und Copolymeren des (Meth)acrylamids. Bevorzugt sind Polymethacxrylamide und Polyamine, insbesondere auf Basis Epichlorhydrin und Dimethylamin.

Die Mengen an polymeren Fällhilfsmitteln betragen 0,01 bis 5 Gew.-Teilen, bevorzugt 0,05 bis 2,5 Gew.-Teile auf 100 Gew.-Teile Nitrilkautschuk.

Auch der Einsatz anderer Fällhilfsmittel ist denkbar. Es ist aber anzumerken, dass es ohne Probleme möglich ist, das erfindungsgemäße Verfahren mit dem gewünschten Erfolg in Abwesenheit von zusätzlichen Fällhilfsmitteln und dabei insbesondere in Abwesenheit von $C_1$-$C_4$-Alkylcellulosen, Hydroxyalkylcellulosen, auf Pflanzen zurückgehenden proteinartigen Materialien oder Polysacchariden, wie z.B. Stärke, oder wasserlöslichen Polyaminverbindungen durchzuführen

Der zur Koagulation eingesetzte Latex besitzt zweckmäßigerweise eine **Feststoffkonzentration** im Bereich von 1 % bis 40 %, vorzugsweise im Bereich von 5 % bis 35 % und besonders bevorzugt im Bereich von 15 bis 30 Gew. %.

Die Latexkoagulation wird im Temperaturbereich von 10 bis 100°C durchgeführt. Vorzugsweise erfolgt die

Latexkoagulation bei einer Temperatur von 20 bis 90°C.

Die Latexkoagulation kann kontinuierlich oder diskontinuierlich erfolgen, bevorzugt wird kontinuierlich gearbeitet.

**Wäsche des koagulierten Nitrilkautschuks:**

Nach der Koagulation liegt der Nitrilkautschuk üblicherweise in Form sogenannter Krümel vor. Die Wäsche des koagulierten NBR wird daher auch als Krümelwäsche bezeichnet. Für die Wäsche dieser koagulierten Krümel kann entweder entionisiertes Wasser (auch als "DW" bezeichnet) oder nicht entionisiertes Wasser (auch als "BW" bezeichnet) eingesetzt werden. Sofern bei der Koagulation des Latex mit mindestens einem Salz ausgewählt aus der zuvor definierten Gruppe von Salzen kein Calcium-Salz anwesend ist, ist bei der Wäsche des koagulierten Nitrilkautschuks nicht entionisiertes und damit calciumionenhaltiges Wasser zu verwenden.

Die Wäsche wird bei einer Temperatur im Bereich von 15 bis 90°C durchgerührt, bevorzugt bei einer Temperatur im Bereich von 20 bis 80°C.

Die Menge des Waschwassers beträgt 0,5 bis 20 Gew.-Teile, bevorzugt 1 bis 10 Gew.-Teile und besonders bevorzugt 1 bis 5 Gew.-Teile bezogen auf 100 Gew.-Teile Nitrilkautschuk.

Bevorzugterweise werden die Kautschukkrümel einer mehrstufigen Wäsche unterworfen, wobei die Kautschukkrümel zwischen den einzelnen Waschstufen teilweise entwässert werden. Die Restfeuchten der Krümel zwischen den einzelnen Waschstufen liegen im Bereich von 5 bis 50 Gew.%, vorzugsweise im Bereich von 7 bis 25 Gew. %. Die Zahl der Waschstufen liegt üblicherweise bei 1 bis 7, vorzugsweise bei 1 bis 3. Die Wäsche wird diskontinuierlich oder kontinuierlich durchgeführt. Vorzugsweise verwendet man ein mehrstufiges, kontinuierliches Verfahren, wobei für den schonenden Umgang mit Wasser eine Gegenstromwäsche bevorzugt ist.

**Wasserentfernung und Trocknung:**

Nach Abschluss der Wäsche hat es sich bewährt, die Nitrilkautschuk-Krümel zu entwässern. Dies geschieht üblicherweise zweistufig. In der 1. Stufe werden die Kautschukkrümel mechanisch vorentwässert. In der 2. Stufe wird das restliche Wasser verdampft. Sowohl die Vorentwässerung als auch die Trocknung erfolgen bevorzugt kontinuierlich. Für die mechanische Vorentwässerung eignen sich Seiherschnecken, bei denen das Wasser seitlich über Seiherspalte abgequetscht wird oder Schnecken, bei denen die mechanische Entwässerung gegen den Produktstrom (Weldingprinzip) erfolgt.

Die Einstellung der im Nitrilkautschuk verbleibenden Kationengehalte kann zusätzlich und wenn gewünscht durch den Grad der mechanischen Vorentwässerung beeinflusst werden. Dies bietet sich insbesondere dann an, wenn eine **sogenannte ineffiziente Wäsche** angewandt wird. Eine effizienten Wäsche liefert bereits die geeigneten Kationengehalte. Die Wassergehalte nach der mechanischen Vorentwässerung liegen im Bereich von 5 bis 25 Gew. %. Für die Einstellung des im Produkt verbleibenden Kationenmixes hat es sich bewährt, dass die Wassergehalte nach der mechanischen Vorentwässerung 5 bis 15 Gew. %, insbesondere 5 bis 10 Gew. % betragen.

Die Trocknung des vorentwässerten Nitrilkautschuks erfolgt in einem Fließbettrockner oder in einem Plattentrockner. Die Temperaturen bei der Trocknung liegen bei 80 bis 150°C. Bevorzugt ist eine Trocknung mit Temperaturprogramm, wobei gegen Ende des Trockenprozesses die Temperatur abgesenkt wird.

Überraschenderweise besitzen die erfindungsgemäßen Nitrilkautschuke, die den aufgeführten speziellen Gehalt an Calcium sowie Chlor vorweisen, die gewünschte hohe Lagerstabilität LS von maximal 5 Mooney-Einheiten. Die hohe Lagerstabilität hat bereits während der Trocknung des Nitrilkautschuks positive Auswirkungen, da ansonsten bei dieser Trocknung schon unwillkürlich eine gewisse Alterung des Kautschuks stattfindet. Durch die hohe Lagerstabilität wird die Einstellung einer vorgegebenen Ziel-Mooney-Viskosität erleichtert. Hierdurch wird die Menge an nicht spezifikationsgerechtem Nitrilkautschuk reduziert. Des weiteren resultiert aus der hohen Lagerstabilität eine Reduktion der Reklamationen, die sich durch Änderung der Mooney-Viskosität bei langen Lager- bzw. Transportzeiten ergeben. Die erfindungsgemäßen Kautschuke eignen sich für die reproduzierbare Herstellung von vulkanisierbaren Mischungen. Die hieraus durch Vulkanisation erhältlichen Formteile zeichnen sich somit auch durch ein reproduzierbares mechanisches und physikalisches Eigenschaftsprofil aus.

**Gegenstand der Erfindung** ist daher auch die Verwendung der erfindungsgemäßen Nitrilkautschuke zur Herstellung von vulkanisierbaren Mischungen enthaltend mindestens einen erfindungsgemäßen Nitrilkautschuk, mindestens einen Vernetzer und gegebenenfalls weitere Additive.

Die Herstellung dieser vulkanisierbaren Mischungen erfolgt durch Mischen mindestens eines erfindungsgemäßen Nitrilkautschuks, mindestens eines Vernetzers und gegebenenfalls weiterer Additive.

Als Vernetzer kommen beispielsweise peroxidische Vernetzer in Frage wie Bis(2,4-dichlorbenzyl)peroxid, Dibenzoylperoxid, Bis(4-chlorbenzoyl)peroxid, 1,1-Bis-(t-butylperoxy)-3,3,5-trimethylcylohexan, tert-Butylperbenzoat, 2,2 Bis(t-butylperoxy) buten, 4,4-di-tert.Butyl peroxynonylvalerat, Dicumylperoxid, 2,5-Dimethyl-2,5-di(t-butylperoxy)-hexan,

tert-Butylcumylperoxid, 1,3-Bis(t-butylperoxy isopropyl)-benzol, Di-t-butylperoxid und 2,5-Dimethyl-2,5-di(t-butylperoxy)-hexyn-3.

Es kann vorteilhaft sein, neben diesen peroxidischen Vernetzern noch weitere Zusätze zu verwenden, mit deren Hilfe die Vernetzungsausbeute erhöht werden kann: Hierfür sind beispielsweise Triallylisocyanurat, Triallylcyanurat, Trimethylolpropan-tri(meth)acrylat, Triallyltrimellithat, Ethylenglycoldimethacrylat, Butandioldimethacrylat, Trimetylolpropantrimethacrylat, Zn-diacrylat, Zn-dimethacrylat, 1,2-Polybutadien oder N,N-'m-phenylendimaleinimid geeignet.

Die Gesamtmenge des oder der Vernetzer liegt üblicherweise im Bereich von 1 bis 20 phr, bevorzugt im Bereich von 1,5 bis 15 phr und besonders bevorzugt im Bereich von 2 bis 10 phr, bezogen auf den Nitrilkautschuk.

Als Vernetzer können auch Schwefel in elementarer löslicher oder unlöslicher Form oder Schwefelspender eingesetzt werden.

Als Schwefelspender kommen beispielsweise Dimorpholyldisulfid (DTDM), 2-Morpholinodithiobenzothiazol (MBSS), Caprolactamdisulfid, Dipentamethylenthiuramtetrasulfid (DPTT), und Tetramethylthiuramdisulfid (TMTD) in Frage.

Auch bei der Schwefelvulkanisation der erfindungsgemäßen Nitrilkautschuke ist es möglich, noch weitere Zusätze zu verwenden, mit deren Hilfe die Vernetzungsausbeute erhöht werden kann. Grundsätzlich kann die Vernetzung aber auch mit Schwefel oder Schwefelspendern allein erfolgen.

Umgekehrt kann die Vernetzung der erfindungsgemäßen Nitrilkautschuke aber auch nur in Gegenwart der oben genannten Zusätze erfolgen, d.h. ohne Zusatz von elementarem Schwefel oder Schwefelspendern.

Als Zusätze, mit deren Hilfe die Vernetzungsausbeute erhöht werden kann, eignen sich z.B. Dithiocarbamate, Thiurame, Thiazole, Sulfenamide, Xanthogenate, Guanidinderivate, Caprolactame und Thiohamstoffderivate.

Als Dithiocarbamate können beispielsweise eingesetzt werden: Ammoniumdimethyldithiocarbamat, Natriumdiethyldithiocarbamat (SDEC), Natriumdibutyl-dithiocarbamat (SDBC), Zinkdimethyldithiocarbamat (ZDMC), Zinkdiethyldithiocarbamat (ZDEC), Zinkdibutyldithio-carbamat (ZDBC), Zinkethylphenyldithiocarbamat (ZEPC), Zinkdibenzyldithiocarbamat (ZBEC), Zinkpentamethylendithiocarbamat (Z5MC), Tellurdiethyldithio-carbamat, Nickeldibutyldithiocarbamat, Nickeldimethyldithiocarbamat und Zinkdiisononyldithio-carbamat.

Als Thiurame können zum Beispiel eingesetzt werden: Tetramethylthiuramdisulfid (TMTD), Tetramethylthiurammonosulfid (TMTM), Dimethyldiphenylthiuramdisulfid, Tetrabenzylthiuramdisulfid, Dipentamethylenthiuramtetrasulfid und Tetraethylthiuramdisulfid (TETD), Als Thiazole können zum Beispiel eingesetzt werden: 2-Mercaptobenzothiazol (MBT), Dibenzthiazyldisulfid (MBTS), Zinkmercaptobenzothiazol (ZMBT) und Kupfer-2-mercaptobenzothiazol.

Als Sulfenamidderivate können zum Beispiel eingesetzt werden: N-Cyclohexyl-2-benzothiazylsulfenamid (CBS), N-tert.-Butyl-2-benzthiazylsulfenamid (TBBS), N,N'-Dicyclohexyl-2-benzthiazylsulfenamid (DCBS), 2-Morpholinothiobenzthiazol (MBS), N-Oxydiethylenthiocarbamyl-N-tert.butylsulfenamid und Oxydiethylenthiocarbamyl-N-oxyethylensulfenamid.

Als Xanthogenate können zum Beispiel eingesetzt werden: Natriumdibutylxanthogenat, Zinkisopropyldibutylxanthogenat und Zinkdibutylxanthogenat.

Als Guanidinderivate können zum Beispiel eingesetzt werden: Diphenylguanidin (DPG), Di-o-tolylguanidin (DOTG) und o-Tolylbiguanid (OTBG).

Als Dithiophosphate können beispielsweise eingesetzt werden: Zinkdialkydithiophosphate (Kettenlänge der Alkylreste $C_2$ bis $C_{16}$), Kupferdialkyldithiophosphate (Kettenlänge der Alkylreste $C_2$ bis $C_{16}$) und Dithiophoshorylpolysulfid.

Als Caprolactam kann beispielsweise Dithio-bis-caprolactam eingesetzt werden.

Als Thioharnstoffderivate können beispielsweise N,N'-Diphenylthioharnstoff (DPTU), Diethylthioharnstoff (DETU) und Ethylenthioharnstoff (ETU) eingesetzt werden.

Ebenso als Zusätze geeignet sind beispielsweise: Zinkdiamindiisocyanat, Hexamethylentetramin, 1,3-Bis(citraconimidomethyl)benzol sowie zyklische Disulfane.

Die genannten Zusätze als auch die Vernetzungsmittel können sowohl einzeln als auch in Mischungen eingesetzt werden. Bevorzugt werden folgende Substanzen für die Vernetzung der Nitrilkautschuke eingesetzt: Schwefel, 2-Mercaptobenzthiazol, Tetramethylthiuramdisulfid, Tetramethylthiurammonosulfid, Zinkdibenzyldithiocarbamat, Dipentamethylenthiuramtetrasulfid, Zinkdialkydithiophosphat, Dimorpholyldisulfid, Tellurdiethyldithiocarbamat, Nickeldibutyldithiocarbamat, Zinkdibutyldithiocarbamat, Zinkdimethyldithiocarbamat und Dithio-bis-caprolactam.

Die Vernetzungsmittel und zuvor genannten Zusätze können jeweils in Mengen von ca. 0,05 bis 10 phr, vorzugsweise 0,1 bis 8 phr, insbesondere 0,5 bis 5 phr (Einzeldosierung, jeweils bezogen auf die Wirksubstanz) eingesetzt werden.

Bei der erfindungsgemäßen Schwefelvernetzung ist es gegebenenfalls auch sinnvoll, zusätzlich zu den Vernetzungsmitteln und oben genannten Zusätzen auch weitere anorganische bzw. organische Substanzen mit zu verwenden, beispielsweise: Zinkoxid, Zinkcarbonat, Bleioxid, Magnesiumoxid, gesättigte oder ungesättigte organische Fettsäuren und deren Zinksalze, Polyalkohole, Aminoalkohole, wie zum Beispiel Triethanolamin sowie Amine wie zum Beispiel Dibutylamin, Dicyclohexylamin, Cyclohexylethylamin und Polyetheramine.

Daneben können auch Anvulkanisationsverzögerer eingesetzt werden. Hierzu gehören Cyclohexylthiophthalimid (CTP), N,N' Dinitrosopentamethlyentetramin (DNPT), Phthalsäureanhydrid (PTA) und Diphenylnitrosamin. Bevorzugt ist Cyclohexylthiophtalimid (CTP).

Neben der Zugabe des oder der Vernetzer kann der erfindungsgemäße Nitrilkautschuk auch mit weiteren üblichen Kautschukadditiven gemischt werden.

Diese schließen beispielsweise die typischen und dem Fachmann hinlänglich bekannten Substanzen wie Füllstoffe, Füllstoffaktivatoren, Ozonschutzmittel, Alterungsschutzmittel, Antioxidationsmittel, Verarbeitungshilfsmittel, Extenderöle, Weichmacher, Verstärkungsmaterialien und Formtrennmittel ein.

Als **Füllstoffe** können beispielsweise Ruß, Kieselsäure, Bariumsulfat, Titandioxid, Zinkoxid, Calciumoxid, Calciumcarbonat, Magnesiumoxid, Aluminiumoxid, Eisenoxid, Aluminiumhydroxid, Magnesiumhydroxid, Aluminiumsilikate, Diatomeenerde, Talkum, Kaoline, Bentonite, Kohlenstoff Nanotubes ,Teflon (letzteres bevorzugt in Pulverform),oder Silikate eingesetzt werden.

Als **Füllstoffaktivatoren** kommen insbesondere organische Silane, wie beispielsweise Vinyltrimethyloxysilan, Vinyldimethoxymethylsilan, Vinyltriethoxysilan, Vinyltris(2-methoxyethoxy)silan, N-Cyclohexyl-3-aminopropyltrimethoxysilan, 3-Aminopropyl-trimethoxysilan, Methyltrimethoxysilan, Methyltlriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan oder (Octadecyl)methyldimethoxysilan in Betracht. Weitere Füllstoffaktivatoren stellen zum Beispiel grenzflächenaktive Substanzen wie Triethanolamin und Ethylenglycole mit Molekulargewichten von 74 bis 10 000 g/mol dar. Die Menge an Füllstoffaktivatoren beträgt üblicherweise 0 bis 10 phr, bezogen auf 100 phr des Nitrilkautschuks.

Als **Alterungsschutzmittel** können den vulkanisierbaren Mischungen diejenigen zugesetzt werden, die bereits im Zusammenhang mit der Latexkoagulation in dieser Anmeldung beschrieben werden. Sie werden üblicherweise in Mengen von ca. 0 bis 5 phr, bevorzugt 0,5 bis 3 phr, bezogen auf 100 phr des Nitrilkautschuks eingesetzt.

Als **Formtrennmittel** kommen beispielsweise in Betracht: Gesättigte und teilweise ungesättigte Fett- und Ölsäuren und deren Derivate (Fettsäureester, Fettsäuresalze, Fettalkohole, Fettsäureamide), die vorzugsweise als Mischungsbestandteil Verwendung finden, weiterhin auf die Formoberfläche applizierbare Produkte, wie beispielsweise Produkte auf Basis von niedermolekularen Silikonverbindungen, Produkte auf Basis von Fluorpolymeren sowie Produkte auf Basis von Phenolharzen.

Die Formtrennmittel werden als Mischungsbestandteil in Mengen von ca. 0 bis 10 phr, bevorzugt 0,5 bis 5 phr, bezogen auf 100 phr des Nitrilkautschuks eingesetzt.

Auch die Verstärkung mit Festigkeitsträgern (Fasern) aus Glas, nach der Lehre von US-A-4,826,721 ist möglich sowie die Verstärkung durch Corde, Gewebe, Fasern aus aliphatischen und aromatischen Polyamiden (Nylon®, Aramid®), Polyestern und Naturfaserprodukten.

**Gegenstand der Erfindung** ist ferner ein Verfahren zur Herstellung von Formteilen auf Basis mindestens eines erfindungsgemäßen Nitrilkautschuks, welches dadurch gekennzeichnet ist, dass man die zuvor beschriebene vulkanisierbare Mischung in einem Formgebungsverfahren, bevorzugt unter Anwendung eines Spritzgussverfahrens, vulkanisiert.

**Gegenstand der Erfindung** ist somit ebenso das spezielle Formteil, welches erhältlich ist durch das vorgenannte Vulkanisationsverfahren.

Durch dieses Verfahren können eine Vielzahl von Formteilen hergestellt werden, so z.B. eine Dichtung, eine Kappe, einen Schlauch oder eine Membran. Insbesondere eignen sich die erfindungsgemäßen Nitrilkautschuke mit der speziellen Ionenkennzahl zur Herstellung einer O-Ringdichtung, einer Flachdichtung, eines Wellendichtrings, einer Dichtmanschette, einer Dichtkappe, einer Staubschutzkappe, einer Steckerdichtung, eines Thermoisolierschlauchs (mit und ohne PVC-Zusatz), eines Ölkühlerschlauchs, eines Luftansaugschlauchs, eines Servolenkschlaucsh oder einer Pumpenmembran.

Alternativ zur direkten Herstellung von Formteilen auf Basis des erfindungsgemäßen Nitrilkautschuks ist es auch möglich, dass sich an die Herstellung des erfindungsgemäßen Nitrilkautschuks entweder (i) eine Metathese-Reaktion oder (ii) eine Metathese-Reaktion und eine nachfolgende Hydrierung oder (iii) nur eine Hydrierung anschließt. Diese Metathese- bzw. Hydrierungsreaktionen sind beide dem Fachmann hinlänglich bekannt und in der Literatur beschrieben.

Die Metathese ist beispielsweise aus *WO-A-02/100941 sowie der WO-A-02/100905 bekannt.

Eine Hydrierung kann unter Einsatz homogener oder heterogener Hydrierkatalysatoren durchgeführt werden. Es ist ferner möglich, die Hydrierung in-situ durchzuführen, d.h. in dem gleichen Reaktionsgefäß, in dem gegebenenfalls zuvor auch der Metathese-Abbau erfolgte und ohne Notwendigkeit den abgebauten Nitrilkautschuk zu isolieren. Der Hydrierkatalysator wird einfach dem Reaktionsgefäß zugesetzt.

Die eingesetzten Katalysatoren basieren üblicherweise auf Rhodium, Ruthenium oder Titan, es können aber auch Platin, Iridium, Palladium, Rhenium, Ruthenium, Osmium, Kobalt oder Kupfer entweder als Metall, oder aber bevorzugt in Form von Metallverbindungen eingesetzt werden (siehe z.B.US-A-3,700,637, DE-A-25 39 132, EP-A- 0 134 023, DE-OS- 35 41 689, DE-OS- 35 40 918, EP-A-0 298 386, DE-OS- 35 29 252, DE-OS- 34 33 392, US-A-4,464,515

**und** US-A-4,503,196**).**

Geeignete Katalysatoren und Lösungsmittel für eine Hydrierung in homogener Phase werden im Folgenden beschrieben und sind auch aus DE-A-25 39 132 und der EP-A-0 471 250 bekannt

Die selektive Hydrierung kann beispielsweise in Gegenwart eines Rhodium- oder Ruthenium-haltigen Katalysators erreicht werden. Einsetzbar ist beispielsweise ein Katalysator der allgemeinen Formel

$$(R^1{}_mB)_l\ M\ X_n,$$

worin M Ruthenium oder Rhodium ist, $R^1$ gleich oder verschieden sind und eine $C_1$-$C_8$ Alkylgruppe, eine $C_4$-$C_8$ Cycloalkylgruppe, eine $C_6$-$C_{15}$ Aryl-Gruppe oder eine $C_7$-$C_{15}$ Aralkylgruppe darstellen. B ist Phosphor, Arsen, Schwefel oder eine Sulfoxid-Gruppe S=O, X ist Wasserstoff oder ein Anion, vorzugsweise Halogen und besonders bevorzugt Chlor oder Brom, 1 ist 2,3 oder 4, m ist 2 oder 3 und n ist 1,2 oder 3, bevorzugt 1 oder 3. Bevorzugte Katalysatoren sind Tris (triphenylphosphin)-rhodium(I)-chlorid, Tris(triphenylphosphin)-rhodium(III)-chlorid und Tris(dimethylsulfoxid)-rhodium (III)-chlorid sowie Tetrakis(triphenylphosphin)-rhodium-hydrid der Formel $(C_6H_5)_3P)_4RhH$ und die entsprechenden Verbindungen, in denen das Triphenylphosphin ganz oder teilweise durch Tricyclohexylphosphin ersetzt wurde. Der Katalysator kann in kleinen Mengen benutzt werden. Eine Menge im Bereich von 0,01-1 Gew.%, bevorzugt im Bereich von 0,03-0,5 Gew.% und besonders bevorzugt im Bereich von 0,1-0,3 Gew.% bezogen auf das Gewicht des Polymers sind geeignet.

Üblicherweise ist es sinnvoll, den Katalysator zusammen mit einem Co-Katalysator zu verwenden, der ein Ligand der Formel $R^1{}_mB$ ist, wobei $R^1$, m und B die zuvor für den Katalysator genannten Bedeutungen besitzen. Bevorzugt ist m gleich 3, B gleich Phosphor und die Reste $R^1$ können gleich oder verschieden sein. Bevorzugt handelt es sich um Co-Katalysatoren mit Trialkyl, Tricycloalkyl, Triaryl, Triaralkyl, Diaryl-monoalkyl, Diaryl-monocycloalkyl, Dialkyl-monoaryl, Dialkylmonocycloalkyl, Dicycloalkyl-monoaryl oder Dicyclalkyl-monoaryl-Resten.

Beispiele von Co-Katalysatoren finden sich beispielsweise in US-A-4,631,315**.** Bevorzugter Co-Katalysator ist Triphenylphosphin. Der Co-Katalysator wird bevorzugt in Mengen in einem Bereich von 0,3-5 Gew.%, bevorzugt im Bereich von 0,5-4 Gew.% eingesetzt, bezogen auf das Gewicht des zu hydrierenden Nitrilkautschuks. Bevorzugt liegt ferner das Gewichtsverhältnis des Rhodium-haltigen Katalysators zum Co-Katalysator im Bereich von 1:3 bis 1:55, besonders bevorzugt im Bereich von 1:5 bis 1:45. Bezogen auf 100 Gewichtsteile des zu hydrierenden Nitrilkautschuks werden geeigneterweise 0,1 bis 33 Gewichtsteile des Co-Katalyators, bevorzugt 0,5 bis 20 und ganz besonders bevorzugt 1 bis 5 Gewichtsteile, insbesondere mehr als 2 aber weniger als 5 Gewichtsteile Co-Katalysator bezogen auf 100 Gewichtsteile des zu hydrierenden Nitrilkautschuks eingesetzt.

Die praktische Durchführung dieser Hydrierung ist dem Fachmann aus US-A-6,683,136 hinlänglich bekannt. Sie erfolgt üblicherweise, indem man den zu hydrierenden Nitrilkautschuk in einem Lösungsmittel wie Toluol oder Monochlorbenzol bei einer Temperatur im Bereich von 100 bis 150 °C und einem Druck im Bereich von 50 bis 150 bar für 2 bis 10 h mit Wasserstoff beaufschlagt.

Unter Hydrierung wird im Rahmen dieser Erfindung eine Umsetzung der im Ausgangs-Nitrilkautschuk vorhandenen Doppelbindungen zu mindestens 50 %, bevorzugt 70-100%, besonders bevorzugt 80-100%, verstanden.

Bei Einsatz heterogener Katalysatoren handelt es sich üblicherweise um geträgerte Katalysatoren auf der Basis von Palladium, die z. B. auf Kohle, Kieselsäure, Calciumcarbonat oder Bariumsulfat geträgert sind.

Die nach der Metathese- und/oder Hydrierungsreaktion der erfindungsgemäßen Nitrilkautschuke erhaltenen, gegebenenfalls hydrierten Nitrilkautschuke können analog zu den erfindungsgemäßen Nitrilkautschuken in vulkanisierbare Zusammensetzungen eingebracht werden und zur Herstellung von Vulkanisaten und Formteilen auf Basis solcher Vulkanisate verwendet werden. Diese gegebenenfalls hydrierten Nitrilkautschuke weisen Mooney-Viskositäten (ML (1+4 @100°C)) von 1 bis 50, vorzugsweise von 1 bis 40 Mooneyeinheiten auf.

## Beispiele

### I Herstellung der NBR Latices A, B, C

Die Herstellung der in den Beispielserien 1) bis 5) eingesetzten NBR-Latices A, B und C erfolgte nach der in Tabelle 1 angegebenen Basisrezeptur, wobei sämtliche Einsatzstoffe in Gew.-Teilen bezogen auf 100 Gew.-Teile der Monomermischung angegeben sind. Tabelle 1 nennt auch die jeweiligen Polymerisationsbedingungen

**Tabelle 1:**

| Latex-Nr. | A | B | C |
|---|---|---|---|
| Butadien | 73 | 81 | 56 |

(fortgesetzt)

| Latex-Nr. | A | B | C |
|---|---|---|---|
| Acrylnitril | 27 | 12,5/6,5 | 44 |
| Gesamt-Wassermenge | 190 | 180 | 170 |
| Erkantol® BXG1) | 3,69 | 3,69 | 3,69 |
| Baykanol® PQ2) | 1,10 | 1,10 | 1,10 |
| K-Salz der Kokosfettsäure | 0,73 | 0,73 | 0,73 |
| KOH | 0,05 | 0,05 | 0,05 |
| t-DDM3) | 0,24/0,24 | 0,27/0,15/0,06 | 0,5/0,2 |
| Kaliumperoxodisulfat4) | 0,39/0,19 | 0,45/0,20 | 0,27 |
| Tris-(α-hydroxy-ethyl)-amin5) | 0,57 | 0,61 | 0,15 |
| Na-Dithionit6) | 1,20 | 1,20 | 1,20 |
| Kaliumhydroxid | 1,28 | 1,28 | 1,28 |
| Vulkanox® KB7) | 1,25 | 1,25 | 1,25 |
| Polymerisationstemperatur [°C] | 17 | 18 | 20 |
| Polymerisationsumsatz [%] | 75 | 75 | 74,5 |
| Polymerisationszeit [h] | 11 | 15 | 7,5 |

1) Natriumsalz von mono- und disulfonierten Naphthalinsulfonsäuren, die Isobutylenoligomerreste enthalten (Erkantol® BXG)
2) Natriumsalz von Methlyen-bis-Naphthalinsulfonat (Baykanol® PQ; Lanxess Deutschland GmbH)
3) t-DDM: (tertiäres Dodecylmercaptan); Lanxess Deutschland GmbH
4) Aldrich Bestell-Nr. : 21,622-4
5) Aldrich Bestell-Nr. : T5,830-0
6) Aldrich Bestell-Nr. : 15,795-3
7) 2,6-Di-tert.butyl-p-kresol; Lanxess Deutschland GmbH

Sind in der og. Tabelle 1 in einer der Spalten für die Nitrilkautschuke A, B und C mehr als ein Wert angegeben, so bedeutet dies, dass die gesamte Menge des jeweiligen Einsatzstoffes nicht in einer Portion zudosiert wurde, sondern dass eine Nachdosierung (ein oder zweimal) erfolgte. Die Umsätze, bei denen diese Nachdosierung erfolgte, sind nachfolgend angegeben.

Die Herstellung des NBR-Latices erfolgte diskontinuierlich in einem 2 $m^3$-Autoklaven mit Rührwerk. Bei den Autoklavenansätzen wurden jeweils 350 kg der Monomermischung und eine Gesamtwassermenge von 700 kg verwendet. Von dieser Wassermenge wurden 650 kg mit den Emulgatoren (Erkantol® BXG, Baykanol® PQ und K-Salz der Kokosfettsäure) und Natriumhydroxid im Autoklaven vorgelegt und mit einem Stickstoffstrom gespült. Danach wurden die entstabilisierten Monomeren und die erste in Tabelle 1 angegebene Teilmenge des Molekulargewichtsreglers t-DDM zugegeben und der Reaktor verschlossen. Nach der Thermostatisierung des Reaktorinhalts wurden die Polymerisationen durch die Zugabe wässriger Lösungen von Tris-(α-hydroxy-ethyl)-amin und von Kaliumperoxodisulfat (bei A und B die erste Teilmenge wie in Tabelle 1 angegeben) gestartet.

Der Polymerisationsverlauf wurde durch gravimetrische Umsatzbestimmungen verfolgt. Bei einem Polymerisationsumsatz von 15 % wurden bei A und B die Restmengen an Kaliumperoxodisulfat und bei A die Restmenge an t-DDM nachdosiert. Bei Erreichen der in Tabelle 1 angegebenen Umsätze wurde die Polymerisation durch Zugabe einer wässrigen Lösung von Natriumdithionit und Kaliumhydroxyd abgestoppt. Nicht umgesetzte Monomere und sonstige flüchtige Bestandteile wurden mittels Wasserdampfdestillation entfernt.

Bei Latex B erfolgte die Zugabe von insgesamt 19 Gew.-Teilen Acrylnitril gestaffelt: 12,5 Gew.-Teile Acrylnitril wurden im Reaktor vorgelegt, weitere 6,5 Gew.-Teile wurden bei einem Umsatz von 35 % nachdosiert. Die Zugabe des t-DDM erfolgte bei Latex B ebenfalls gestaffelt: 0,27 Gew.-Teile t-DDM wurden im Reaktor vorgelegt, 0,15 Gew.-Teile wurden bei 20 % Umsatz nachdosiert und 0,06 Gew.-Teile wurden bei 40 % Umsatz nachdosiert.

Bei Latex C erfolgte die Zugabe des t-DDM ebenfalls gestaffelt: 0,5 Gew.-Teile t-DDM wurden im Reaktor vorgelegt, 0,2 Gew.-Teilen bei 15 % Umsatz nachdosiert.

Die erhaltenen Kautschuklatices bzw. Festkautschuke hatten folgende Eigenschaften:

| Latex-Nr. | A | B | C |
|---|---|---|---|
| Teilchendurchmesser (d50) [nm] | 400 | 360 | 350 |
| Feststoffgehalt [Gew.%] | 20,5 | 22,8 | 24,8 |
| pH-Wert | 8,4 | 11,4 | 10,9 |
| Acrylnitrilgehalt [Gew. %] | 28,9 | 18,8 | 38,6 |

Vor der Koagulation des jeweiligen NBR-Latex wurde dieser jeweils mit einer 50%igen Dispersion von Vulkanox® KB (1,25 Gew. % Vulkanox®KB bezogen auf NBR-Feststoff) versetzt. Die Vulkanox®-KB-Dispersion wurde zuvor bei 95-98°C mit Hilfe eines Ultraturrax hergestellt und bestand aus:

| | |
|---|---|
| 360 g | Entionisiertes Wasser ("DW Wasser") |
| 40 g | Ethoxyliertes Nonylphenol (NP10 der Lanxess Deutschland GmbH) |
| 400 g | Vulkanox® KB |

Die Variation der Bedingungen bei der Latexkoagulation und Krümelwäsche erfolgte an aliquoten Teilen der Latices A, B und C diskontinuierlich in einem rührbaren, offenen Behälter mit 100 l Fassungsvermögen.

Für die Latexkoagulation wurden jeweils 25 kg Latex eingesetzt, wobei die für eine quantitative Latexkoagulation notwendigen Mengen an Salzen in Vorversuchen ermittelt wurden. Für die Herstellung der Salzlösungen wurde sowohl entionisiertes ("DW") als auch nicht entionisiertes und somit calciumionenhaltiges Wasser ("BW") verwendet. Die Salzlösungen wurden im Koagulationsbehälter vorgelegt (Salzart, Konzentration der Salzlösung; Salzmengen bez. auf NBR, Koagulationstemperatur etc. sind jeweils in den nachfolgenden Tabellen aufgelistet), bevor der Latex unter Rühren zugegeben wurde. Die Latexkoagulation war üblicherweise innerhalb von wenigen Minuten (< 5 min) abgeschlossen. Die Salzmengen waren jeweils so ausgelegt, dass die Kautschukkrümel größer als 5 mm waren, so dass sie bei der nachfolgenden Krümelwäsche nicht ausgetragen wurden. Für die Durchführung der Krümelwäsche verfügte der Behälter über einen Zu- und Abfluss. An der Innenseite des Behälters waren zwei Schienen angebracht, so dass der Abfluss mittels eines Siebes (Maschenweite 2 mm) vor der Durchführung der Wäsche abgesperrt werden konnte, so die koagulierten Krümel bei der Wäsche nicht ausgeschwemmt wurden. Die Wäsche wurde bei den hier beschriebenen Versuche mit einem konstanten Wasserdurchsatz von 200 l/h durchgeführt. Für die Wäsche wurde sowohl entionisiertes (DW) als auch nicht entionisiertes Wasser (BW) verwendet. Das bei der Fällung anfallende Latexserum wurde vor Beginn der Wäsche nicht aus dem Koagulationsbehälter entfernt; d. h. das Latexserum wurde durch Verdünnungswäsche entfernt. Die bei der Krümelwäsche angewandten Rahmenbedingungen (Wasserart, Waschtemperatur, Waschzeit etc.) sind in den nachfolgenden Tabellen aufgelistet.

Nach Beendigung der Wäsche wurden die Kautschukkrümel mit einem Sieb entnommen, in einer Weldingschnecke auf eine Restfeuchte von 5 bis 20 Gew. % vorentwässert und diskontinuierlich in einem Umlufttrockenschrank auf eine Restfeuchte von < 0, 6 % getrocknet.

Der getrockneten NBR-Kautschuke wurden durch die Mooney-Viskosität vor und nach Heißluftlagerung für 48 Stunden bei 100°C charakterisiert, d.h. die Bestimmung der Mooney-Viskosität erfolgte einmal direkt nach der Trocknung (d.h. vor der Heißluftlagerung) sowie anschließend nach 48stündiger Heißlaftlalterung bei 100°C.

Für die Bestimmung des **Calcium-Gehalts** wurden 0,5 g der Nitrilkautschuke durch trockene Veraschung bei 550°C im Platintiegel mit anschliessendem Lösen der Asche in Salzsäure aufgeschlossen. Nach geeigneter Verdünnung der Aufschlusslösung mit deionisiertem Wasser wurde der Calcium-Gehalt durch ICP-OES (inductively coupled plasma - optical emission spectrometry) bei einer Wellenlänge von 317,933 nm gegen mit Säurematrix angepasste Kalibrierlösungen bestimmt. Je nach Konzentration der Elemente in der Aufschlusslösung bzw. Empfindlichkeit des verwendeten Messgeräts wurden die Konzentrationen der Probelösungen für die jeweils verwendeten Wellenlängen an den linearen Bereich der Kalibrierung angepasst **(**B. Welz "Atomic Absorption Spectrometry", 2nd Ed., Verlag Chemie, Weinheim 1985**)**

Der Chlorgehalt der erfindungsgemäßen Nitrilkautschuke wird wie folgt in Anlehnung an DIN EN 14582, Verfahren A bestimmt: Die Nitrilkautschuk-Probe wird in einem Druckgefäß nach Parr in einer Schmelze aus Natriumperoxid und Kaliumnitrat aufgeschlossen. Zu der entstehenden Schmelze wird Sulfitlösung zugegeben und mit Schwefelsäure angesäuert. In der dabei erhaltenen Lösung wird das entstandene Chlorid durch eine potentiometrische Titration mit Silbernitratlösung bestimmt und als Chlor berechnet.

**Beispiele 1-10: (Erfindungsgemäße Beispiele sowie Vergleichsbeispiele)**

**Lagerstabilität des Nitrilkautschuks (28,9 Gew.% Acrylnitril), der aus Latex A unter den in der folgenden Tabelle angegebenen Koagulations- und Waschbedingungen erhalten wurde.**

Die Krümelwäsche erfolgte in allen Fällen bei 20°C und mit deionisiertem Wasser (DW).

Die Vergleichsbeispiele sind durch ein "V" vor der Numerierung gekennzeichnet.

| Beispiel | Latex-Koagulation | | | | | Wasch dauer [h] | Chlor-Gehalt [ppm] | Ca [ppm] | Mg [ppm] | ML(1+4@100°C). [ME] | | |
|---|---|---|---|---|---|---|---|---|---|---|---|---|
| | pH des Latex | Salzart | Konz. der Salzlösung [Gew.%] | Salzmenge bez auf NBR [Gew. %] | T [°C] | | | | | MV1 | MV2 | LS |
| **1** | 8,4 | $CaCl_2$ | 0,6 | 6 | 20 | 3,8 | **110** | **1290** | 3 | 52 | 55 | **3** |
| **2** | 8,4 | $CaCl_2$ | 1,2 | 12 | 20 | 3,5 | **108** | **1240** | 2 | 53 | 56 | **3** |
| **3** | 6,0 / HCl | $CaCl_2$ | 1,2 | 12 | 20 | 3,5 | **100** | **1235** | 2 | 50 | 50 | **0** |
| **V4** | 6,0 / $H_2SO_4$ | $MgCl_2$ | 1,6 | 16 | 20 | 4,3 | **33** | **25** | 325 | 43 | 96 | **53** |
| **V5** | 8,4 | $MgSO_4$ | 1,5 | 15 | 20 | 3,5 | **30** | **10** | 350 | 48 | 67 | **19** |
| **V6** | 6,0 / $H_2SO_4$ | $MgSO_4$ | 1,0 | 10 | 20 | 2,5 | **25** | **5** | 260 | 46 | 111 | **65** |
| **V7** | 8,4 | $Al_2(SO_4)_3$ | 0,15 | 1,5 | 20 | 2,7 | **29** | **2** | 3 | 50 | 164 | **114** |
| **V8** | 6,0 / $H_2SO_4$ | $Al_2(SO_4)_3$ | 0,10 | 1,0 | 20 | 2,5 | **28** | **2** | 2 | 55 | >20 | **>150** |
| **V9** | 8,4 | $KAl(SO_4)_2$ | 0,21 | 2,1 | 20 | 2,5 | **28** | **11** | 2 | 48 | 137 | **89** |
| **V10** | 6,0 / $H_2SO_4$ | $KAl(SO_4)_2$ | 0,15 | 1,5 | 20 | 3,6 | **30** | **4** | 1 | 50 | 135 | **85** |

Ist in Spalte 2 der og. Tabelle eine Säure angegeben (NCl, $H_2SO_4$) so bedeutet dies, dass der angegebene pH-Wert durch Zugabe dieser Säure eingestellt wurde.

In dieser Beispielserie wird gezeigt, dass bei Anwendung einer Krümelwäsche mit deionisiertem Wasser nur bei Verwendung von $CaCl_2$ als Fällektrolyt Nitrilkautschuke mit ausreichender Lagerstabilität erhalten werden. Die lagerstabilen Nitrilkautschuke weisen Calcium-Mengen von 1235 bis 1290 ppm.

**Beispiele 11-20: (Erfindungsgemäße Beispiele sowie Vergleichsbeispiele)**

**Lagerstabilität des Nitrilkautschuks (28,9 Gew.% Acrylnitril), der aus Latex A unter den in der folgenden Tabelle angegebenen Koagulations- und Waschbedingungen erhalten wurde.**

Die Krümelwäsche erfolgte in allen Fällen bei 20°C und entweder mit deionisiertem Wasser (DW) oder calciumionenhaltigem Wasser (BW)

| Beispiel | Latex-Koagulation | | | | | Waschbedingungen | | | | | ML1+4 @100°C [ME] | | |
|---|---|---|---|---|---|---|---|---|---|---|---|---|---|
| | pH des Latex | Salzart | Konz. der Salzlösung [Gew.%] | Salzmenge bez. auf NBR [Gew %] | T [°C] | Wasserart | Zeit [h] | **Chlor Gehalt [ppm]** | **Ca [ppm]** | **Mg [ppm]** | **MV1** | **MV2** | **LS** |
| **11** | 6,0 / $H_2SO_4$ | NaCl / DW | 7 | 70 | RT | BW | 7,75 | 110 | **805** | 25 | 48 | 48 | 0 |
| **12** | 6,0 / $H_2SO_4$ | NaCl / BW | 7 | 70 | RT | BW | 7,75 | 85 | **850** | 27 | 48 | 51 | 3 |
| **13** | 6,0 / HCl | $MgCl_2$ | 0,8 | 8 | RT | BW | 5,0 | 51 | **755** | 230 | 47 | 48 | 1 |
| **14** | 6,0 / HCl | $MgCl_2$/ $CaCl_2$ | 0,8 | 7,6/0,4 | RT | BW | 5,0 | 52 | **890** | 170 | 51 | 46 | -5 |
| **15** | 6,0 / HCl | $MgCl_2$ | 0,8 | 8 | RT | BW | 5 | 53 | **725** | 225 | 43 | 45 | 2 |
| **V16** | 6,0 / HCl | $MgCl_2$ | 0,8 | 8 | RT | DW | 5 | 36 | **10** | 225 | 40 | 59 | 19 |
| **17** | 6,0 / HCl | $MgCl_2$ | 1,6 | 16 | RT | BW | 5 | 88 | **750** | 265 | 44 | 46 | 2 |
| **V18** | 6,0 / HCl | $MgCl_2$ | 1,6 | 16 | RT | DW | 5,0 | 39 | **15** | 255 | 41 | 58 | 17 |
| **19** | 9,5 | $MgCl_2$/ $CaCl_2$ | 0,8 | 8/0,4 | RT | BW | 5,0 | 49 | **490** | 106 | 45 | 48 | 3 |
| **20** | 9,5 | $MgCl_2$/ $CaCl_2$ | 0,8 | 8/0,4 | RT | BW | 2,5 | 62 | **540** | 121 | 43 | 45 | 2 |

Ist in Spalte 2 der og. Tabelle eine Säure angegeben (HCl, $H_2SO_4$) so bedeutet dies, dass der angegebene pH-Wert durch Zugabe dieser Säure eingestellt wurde.

In der Versuchsserie 2) wird gezeigt, dass durch Verwendung von nicht entionisiertem und somit Cahaltigem Wasser (BW) bei der Krümelwäsche lagerstabile Nitrilkautschuke erhalten werden. Die Anwendung von entionisiertem Wasser (DW) bei der Krümelwäsche führt nicht zu Nitrilkautschuken mit ausreichender Lagerstabilität. Die lagerstabilen erfindungsgemäßen Nitrilkautschuke enthalten Ca in Mengen von 490 bis 890 ppm.

**Beispiele 21-31: (Erfindungsgemäße Beispiele)**

**Lagerstabilität des Nitrilkautschuks (28,9 Gew.% Acrylnitril), der aus Latex A unter den in der folgenden Tabelle angegebenen Koagulations- und Waschbedingungen erhalten wurde.**

Die Krümelwäsche erfolgte in allen Fällen mit calciumionenhaltigem Wasser (BW).

| **Beispiel** | **Latex-Koagulation** | | | | | **Waschbedingungen** | | | | | **ML1+4 @100°C [ME]** | | |
|---|---|---|---|---|---|---|---|---|---|---|---|---|---|
| | pH des Latex | Salzart | Konz. der Salzlösung [Gew%] | Salzmenge bez. auf NBR [Gew%] | T [°C] | T [°C] | Zeit [h] | Chlor Gehalt [ppm] | Ca [ppm] | Mg [ppm] | **MV1** | **MV2** | **LS** |
| **21** | 8,4 | NaCl | 18 | 63 | 70 | RT | 2,5 | **240** | **610** | 21 | 47 | 47 | 3 |
| **22** | 8,4 | NaCl | 18 | 63 | 70 | RT | 10 | **170** | **560** | 24 | 48 | 47 | 3 |
| **23** | 8,4 | NaCl | 18 | 63 | 70 | RT | 5,0 | **220** | **705** | 19 | 46 | 49 | 3 |
| **24** | 8,4 | NaCl | 18 | 63 | 70 | RT | 15,0 | **230** | **645** | 18 | 48 | 48 | 3 |
| **25** | 8,4 | NaCl | 18 | 63 | 70 | 65 | 2,5 | **970** | **565** | 21 | 47 | 47 | 3 |
| **26** | 8,4 | $MgCl_2$ | 35 | 2,71 | RT | RT | 2,5 | **63** | **830** | 235 | 45 | 48 | 3 |
| **27** | 8,4 | $MgCl_2$ | 35 | 2,71 | 45 | 60 | 5,0 | **44** | **610** | 107 | 45 | 48 | 3 |
| **28** | 8,4 | $MgCl_2$ | 20 | 2,37 | 45 | 60 | 8 | **86** | **400** | 83 | 46 | 47 | 3 |
| **29** | 8,4 | $MgCl_2$ | 20 | 2,37 | 70 | 60 | 8 | **97** | **215** | 101 | 46 | 46 | 3 |
| **30** | 8,4 | $MgCl_2$ | 20 | 2,37 | 80 | 60 | 8 | **120** | **225** | 107 | 46 | 48 | 3 |
| **31** | 8,4 | $MgCl_2$ | 29 | 2,37 | 90 | 60 | 8 | **76** | **171** | 111 | 46 | 48 | 3 |

In der Beispielserie 3) wird gezeigt, dass durch Variation der Bedingungen bei der Latexkoagulation und bei der Krümelwäsche lagerstabile Nitrilkautschuke mit Ca-Gehalten im Bereich von 171 ppm bis 830 ppm erhalten werden.

**Beispiele 32-35: (Erfindungsgemäße Beispiele)**

**Lagerstabilität des Nitrilkautschuks (18,8 Gew.% Acrylnitril), der aus Latex B unter den in der folgenden Tabelle angegebenen Koagulations- und Waschbedingungen erhalten wurde.**

Die Krümelwäsche erfolgte in allen Fällen mit calciumionenhaltigem Wasser (BW)

| **Beispiel** | **Latex-Koagulation** | | | | | **Waschbedingungen** | | **Chlor-Gehalt [ppm]** | **Ca [ppm]** | **ML 1+4 @100°C [ME]** | | |
|---|---|---|---|---|---|---|---|---|---|---|---|---|
| | pH des Latex | Salzart | Konz. der Salzlösung [Gew.%] | Salzmenge bez. auf NBR [Gew. %] | T [°C] | T [°C] | Zeit [h] | | | **MV1** | **MV2** | **LS** |
| **32** | 11,4 | NaCl | 26 | 64 | 90 | 60 | 8 | **220** | **180** | 48 | 51 | 3 |
| **33** | 11,4 | $MgCl_2$ | 35 | 1,8 | 90 | 60 | 8 | **63** | **505** | 46 | 50 | 4 |
| **34** | 11,4 | $CaCl_2$ | 10 | 1,63 | 90 | 60 | 8 | **73** | **1225** | 47 | 44 | -3 |
| **35** | 11,4 | $MgCl_2$/ $Cal_2$ | 35 | 1,08 / 0,12 | 90 | 60 | 8 | **43** | **350** | 46 | 49 | 1 |

**Beispiel 36: (Erfindungsgemäßes Beispiel)**

**Lagerstabilität des Nitrilkautschuks (38,6 Gew.% Acrylnitril), der aus Latex C unter den in der folgenden Tabelle angegebenen Koagulations- und Waschbedingungen erhalten wurde.**

Die Krümelwäsche erfolgte mit calciumionenhaltigem Wasser (BW)

| **Beispiel** | **Latex-Koagulation** | | | | | **Waschbedingungen** | | **Chlor-Gehalt [ppm]** | **Ca [ppm]** | **ML 1+4 @100°C [ME]** | | |
|---|---|---|---|---|---|---|---|---|---|---|---|---|
| | pH des Latex | Salzart | Konz. der Salzlösung [Gew.%] | Salzmenge bez. Auf NBR [Gew. %] | T [°C] | T [°C] | Zeit [h] | | | **MV1** | **MV2** | **LS** |
| **36** | 10,9 | $CaCl_2$ | 0,3 | 1,8 | 90 | 60 | 8 | **100** | **1930** | 47 | 51 | 4 |

**Patentansprüche**

1. Nitrilkautschuk, welcher Wiederholungseinheiten mindestens eines α,β-ungesättigten Nitrils, mindestens eines konjugierten Diens und gegebenenfalls eines oder mehrerer weiterer copolymerisierbarer Monomere enthält und der

   (i) einen Calcium-Gehalt von mindestens 150 ppm, bezogen auf den Nitrilkautschuk, und einen Chlor-Gehalt von mindestens 40 ppm, bezogen auf den Nitrilkautschuk, aufweist, und
   (ii) der 2,2,4,6,6-Pentamethylheptan-4-thin- und/oder 2,4,4,6,6-Pentamethylheptan-2-thio- und/oder 2,3,4,6,6-Pentamethylheptan-2-thio und/oder 2,3,4,6,6-Pentamethylheptan-3-thio-Endgruppen enthält.

2. Nitrilkautschuk gemäß Anspruch 1, der einen Calcium-Gehalt von mindestens 200 ppm, bevorzugt von mindestens 400 ppm, besonders bevorzugt von mehr als 500 ppm, inbesondere von mindestens 600 ppm und insbesondere bevorzugt von mindestens 800 ppm Calcium, bezogen auf den Nitrilkautschuk besitzt.

3. Nitrilkautschuk gemäß Anspruch 1 oder 2, der eine Lagerstabilität LS von maximal 5 Mooney-Einheiten, bevorzugt von weniger als 5 Mooney-Einheiten und besonders bevorzugt von maximal 4 Mooney-Einheiten besitzt, wobei sich die Lagerstabilität LS durch folgende Formel (I) ergibt,

$$LS = MV2 - MV1 \qquad (I)$$

   worin

   MV1 den Wert für die Mooney-Viskosität des Nitrilkautschuks und
   MV2 den Wert für die Mooney-Viskosität desselben Nitrilkautschuks nach einer 48 stündigen Lagerung bei 100°C darstellt.

4. Nitrilkautschuk gemäß einem oder mehreren der Ansprüche 1 bis 3, der Wiederholungseinheiten von Acrylnitril, 1,3-Butadien und gegebenenfalls von einem oder mehreren weiteren copolymerisierbaren Monomeren enthält.

5. Nitrilkautschuk gemäß Anspruch 4, der Wiederholungseinheiten von einer oder mehreren α,β-ungesättigten Mono- oder Dicarbonsäuren, deren Estern oder Amiden aufweist, bevorzugt Wiederholungseinheiten eines Alkylesters einer α,β-ungesättigten Carbonsäuren, insbesondere von Methyl(meth)acrylat, Ethyl(meth)acrylat, Pmpyl(meth) acrylat, n-Butyl(meth)acrylat, t-Butyl(meth)acrylat, Hexyl(meth)acrylat, 2-Ethlyhexyl(meth)acrylat, Octyl(meth)acrylat oder Lauryl(meth)acrylat.

6. Nitrilkautschuk gemäß einem oder mehreren der Ansprüche 1 bis 5, der eine Mooney-Viskosität MV1 (ML (1+4 @10000°C)) von 10 bis 150, vorzugsweise von 20 bis 100 Mooneyeinheiten aufweist.

7. Nitrilkautschuk gemäß einem oder mehreren der Ansprüche 1 bis 6 mit einer Glastemperatur im Bereich von -70°C bis +10°C, vorzugsweise im Bereich von -60°C bis 0°C.

8. Nitrilkautschuk gemäß einem oder mehreren der Ansprüche 1 bis 7, der 2,2,4,6,6-Pentamethylheptan-4-thio-, 2,4,4,6,6-Pentamethylheptaat-2-thio-, 2,3,4,6,6-Pentauuethyl-heptan-2-thio und 2,3,4,6,6-Pentamelhylheptan-3-thio-Endgruppen aufweist.

9. Verfahren zur Herstellung eines Nitrilkautschuks gemäß einem oder mehreren der Ansprüche 1-8 durch Emulsionspolymerisation mindestens eines α,β-ungesästtigten Nitrils, mindestens eines konjugierten Diens und gegebenenfalls eines oder mehrerer weiterer copolymerisierbarer Monomere, wobei der bei der Polymerisation zunächst anfallende, den Nitrilkautschuk enthaltende Latex einer Koagulation unterworfen und der koagulierte Nitrilkautschuk, anschließend gewaschen wird, **dadurch gekennzeichnet, dass**

   (i) die Emulsionspolymerisation in Gegenwart eines Gemischs enthaltend 2,2,4,6,6-Pentamethylheptanthiol-4, 2,4,4,6,6-Pentamethylheptanthiol-2, 2,3,4,6,6-Pentamethylheptan-thiol-2 und 2,3,4,6,6-Pentamethylheptanthiol-3 durchgeführt wird,
   (ii) der nach der Polymerisation anfallende, den Nitrilkautschuk enthaltende Latex einer Koagulation unter Einsatz mindestens eines Salzes ausgewählt aus der Gruppe bestehend aus Aluminium-, Calcium-, Magnesium-,

Natrium-, Kalium- und Lithium-Sätzen unterworfen wird,
(iii) entweder bei der Koagulation ein wasserlösliches Calcium-Salz anwesend ist und/oder die Wäsche des koagulierten Nitritkautschuks mit calciumionenhaltigem Wasser durchgeführt wird und
(iv) entweder bei der Emulsionspolymerisation, bei der Koagulation oder bei der nachfolgenden Wäsche des koagulieren Nitrilkautschuks ein Salz auf Basis eines Chlorids anwesend ist.

**10.** Verfahren gemäß Anspruch 9, wobei die Emulsionspolymerisation diskontinuierlich oder kontinuierlich in einer Rührkesselkaskade durchgeführt wird.

**11.** Verfahren gemäß Anspruch 9 oder 10, wobei dem den Nitrilkautschuk enthaltenden Latex vor oder während der Koagulation ein oder mehrere Alterungsschutzmittel zugesetzt werden, bevorzugt phenolische Alterungsschutzmittel.

**12.** Verfahren gemäß einem oder mehreren der Ansprüche 9 bis 11, wobei für die Latexkoagulation Natriumchlorid, Kaliumchlorid, Calciumchlorid, Magnesiumchlorid, Natriumnitrat, Kaliumnitrat, Natriumsulfat, Kalziumsulfat, Natriumhydrogencarbonat, Kaliumhydrogencarbonat, Natriumcarbonat, Kaliumcarbonat, Aluminiumsulfat, Kaliumaluminiumsulfat (Kafiumalaun), Natriumaluminiumsuifat (Natriumalaun), Natriumacetat, Calciuntacetat oder Calciumformiat eingesetzt wird.

**13.** Verfahren gemäß einem oder mehreren der Ansprüche 9 bis 12, worin die für die Latexkoagulation insgesamt eingesetzte Menge des oder der Salze 0,5 - 200 Gew. Teile, vorzugsweise 0,8 - 80 Gew. Teile und besonders bevorzugt 1 - 50 Gew. Teile bezogen auf 100 Gew. Teile Nitrilkautschuk beträgt.

**14.** Verfahren gemäß einem oder mehreren der Ansprüche 9 bis 13, wobei der zur Koagulation eingesetzte Latex eine Feststoffkonzentration im Bereich von 1 % bis 40 %, vorzugsweise im Bereich von 5 % bis 35 % und besonders bevorzugt im Bereich von 15 bis 30 Gew. % besitzt.

**15.** Verfahren gemäß einem oder mehreren der Ansprüche 9 bis 14, wobei die Latexkoagulation bei einer Temperatur im Bereich von 10 bis 100°C, besonders bevorzugt im Bereich von 20 bis 90°C durchgeführt wird.

**16.** Verfahren gemäß einem oder mehreren der Ansprüche 9 bis 15, wobei die Wäsche des koagulierten Nitrilkautschuks bei einer Temperatur im Bereich von 15 bis 90°C und bevorzugt bei einer Temperatur im Bereich von 20 bis 80°C durchgeführt wird.

**17.** Verfahren gemäß einem oder mehreren der Ansprüche 9 bis 16, wobei der erhaltene Nitrilkautschuk anschließend (i) entweder nur einer Metathese-Reaktion oder (ii) einer Metathese-Reaktion und einer nachfolgenden Hydrierung oder (iii) nur einer Hydrierung unterzogen wird.

**18.** Optional hydrierte Nitrilkautschuke erhältlich gemäß dem Verfahren nach Anspruch 17.

**19.** Verwendung der Nitrilkautschuke gemäß einem oder mehreren der Ansprüche 1 bis 8 oder gemäß Anspruch 18 zur Herstellung von vulkanisierbaren Mischungen.

**20.** Vulkanisierbare Mischung enthaltend mindestens einen Nitrilkautschuk gemäß einem oder mehreren der Ansprüche 1 bis 8 oder gemäß Anspruch 18, mindestens einen Vernetzer und gegebenenfalls weitere Additive.

**21.** Verfahren zur Herstellung einer vulkanisierbaren Mischung gemäß Anspruch 20, indem man mindestens einen Nitrilkautschuk gemäß einem oder mehreren der Ansprüche 1 bis 8 oder gemäß Anspruch 18, mindestens einen Vernetzer und gegebenenfalls weitere Additive mischt.

**22.** Verfahren zur Herstellung von Formteilen auf Basis eines Nitrilkautschuks gemäß einem oder mehreren der Ansprüche 1 bis 8 oder gemäß Anspruch 18, indem man eine vulkanisierbare Mischung gemäß Anspruch 20 in einem Formgebungsverfahren, bevorzugt unter Anwendung eines Spritzgussverfahrens, vulkanisiert.

**23.** Formteil erhältlich gemäß dem Verfahren nach Anspruch 22.

**24.** Formteil gemäß Anspruch 23, **dadurch gekennzeichnet, dass** es sich um eine Dichtung, eine Kappe, einen Schlauch oder eine Membran handelt, insbesondere um eine O-Ringdichtung, eine Flachdichtung, einen Wellendichtring, eine Dichtmanschette, eine Dichtkappe, eine Staubschutzkappe, eine Steckerdichtung, einen Thermoisolierschlauch (mit und ohne PVC-Zusatz), einen Ölkühlerschlauch, einen Luftansaugschlauch, einen Servolenkschlauch oder eine Pumpenmembran.

## Claims

1. Nitrile rubber which contains repeating units of at least one α,β-unsaturated nitrile, at least one conjugated diene and optionally one or more further copolymerizable monomers and

   (i) has a calcium content of at least 150 ppm, based on the nitrile rubber, and a chlorine content of at least 40 ppm, based on the nitrile rubber, and
   (ii) contains 2,2,4,6,6-pentamethylheptane-4-thio and/or 2,4,4,6,6-pentamethylheptane-2-thio and/or 2,3,4,6,6-pentamethylheptane-2-thio and/or 2,3,4,6,6-pentamethylheptane-3-thio end groups.

2. Nitrile rubber according to Claim 1 which has a calcium content of at least 200 ppm, preferably at least 400 ppm, particularly preferably more than 500 ppm, in particular at least 600 ppm and especially preferably at least 800 ppm, of calcium, based on the nitrile rubber.

3. Nitrile rubber according to Claim 1 or 2 which has a storage stability SS of not more than 5 Mooney units, preferably less than 5 Mooney units and particularly preferably not more than 4 Mooney units, with the storage stability SS being given by the formula (I),

$$SS = MV2 - MV1 \qquad (I)$$

   where

   MV1 is the Mooney viscosity of the nitrile rubber and
   MV2 is the Mooney viscosity of the same nitrile rubber after storage at 100°C for 48 hours.

4. Nitrile rubber according to one or more of Claims 1 to 3 containing repeating units of acrylonitrile, 1,3-butadiene and optionally one or more further copolymerizable monomers.

5. Nitrile rubber according to Claim 4 having repeating units of one or more α,β-unsaturated monocarboxylic or dicarboxylic acids, their esters or amides, preferably repeating units of an alkyl ester of an α,β-unsaturated carboxylic acid, in particular methyl (meth)acrylate, ethyl (meth)acrylate, propyl (meth)acrylate, n-butyl (meth)acrylate, t-butyl (meth)acrylate, hexyl (meth)acrylate, 2-ethylhexyl (meth)acrylate, octyl (meth)acrylate or lauryl (meth)acrylate.

6. Nitrile rubber according to one or more of Claims 1 to 5 which has a Mooney viscosity MV1 (ML (1+4 @100°C)) of from 10 to 150 Mooney units, preferably from 20 to 100 Mooney units.

7. Nitrile rubber according to one or more of Claims 1 to 6 having a glass transition temperature in the range from -70°C to +10°C, preferably in the range from - 60°C to 0°C.

8. Nitrile rubber according to one or more of Claims 1 to 7 having 2,2,4,6,6-pentamethylheptane-4-thio, 2,4,4,6,6-pentamethylheptane-2-thio, 2,3,4,6,6-pentamethylheptane-2-thio and 2,3,4,6,6-pentamethylheptane-3-thio end groups.

9. Process for producing a nitrile rubber according to one or more of Claims 1-8 by emulsion polymerization of at least one α,β-unsaturated nitrile, at least one conjugated diene and optionally one or more further copolymerizable monomers, with the latex containing the nitrile rubber which is initially obtained in the polymerization being subjected to coagulation and the coagulated nitrile rubber obtained subsequently being washed, **characterized in that**

   (i) the emulsion polymerization is carried out in the presence of a mixture containing 2,2,4,6,6-pentamethylheptane-4-thiol, 2,4,4,6,6-pentamethylheptane-2-thiol, 2,3,4,6,6-pentamethylheptane-2-thiol and 2,3,4,6,6-pentamethylheptane-3-thiol,

(ii) the latex containing the nitrile rubber which is obtained after the polymerization is subjected to coagulation using at least one salt selected from the group consisting of aluminium, calcium, magnesium, sodium, potassium and lithium salts,
(iii) either a water-soluble calcium salt is present in the coagulation and/or the washing of the coagulated nitrile rubber is carried out using water containing calcium ions and
(iv) a salt based on a chloride is present either during the emulsion polymerization, during the coagulation or during the subsequent washing of the coagulated nitrile rubber.

**10.** Process according to Claim 9, wherein the emulsion polymerization is carried out batchwise or continuously in a cascade of stirred vessels.

**11.** Process according to Claim 9 or 10, wherein one or more ageing inhibitors, preferably phenolic ageing inhibitors are added to the latex containing the nitrile rubber before or during coagulation.

**12.** Process according to one or more of Claims 9 to 11, wherein sodium chloride, potassium chloride, calcium chloride, magnesium chloride, sodium nitrate, potassium nitrate, sodium sulphate, potassium sulphate, sodium hydrogencarbonate, potassium hydrogencarbonate, sodium carbonate, potassium carbonate, aluminium sulphate, potassium aluminium sulphate (potassium alum), sodium aluminium sulphate (sodium alum), sodium acetate, calcium acetate or calcium formate is used for the coagulation of the latex.

**13.** Process according to one or more of Claims 9 to 12, wherein the total amount of the salt or salts used for the coagulation of the latex is 0.5-200 parts by weight, preferably 0.8-80 parts by weight and particularly preferably 1-50 parts by weight, per 100 parts by weight of nitrile rubber.

**14.** Process according to one or more of Claims 9 to 13, wherein the latex used for the coagulation has a solids concentration in the range from 1% to 40%, preferably in the range from 5% to 35% and particularly preferably in the range from 15 to 30% by weight.

**15.** Process according to one or more of Claims 9 to 14, wherein the coagulation of the latex is carried out at a temperature in the range from 10 to 100°C, particularly preferably in the range from 20 to 90°C.

**16.** Process according to one or more of Claims 9 to 15, wherein the washing of the coagulated nitrile rubber is carried out at a temperature in the range from 15 to 90°C, preferably at a temperature in the range from 20 to 80°C.

**17.** Process according to one or more of Claims 9 to 16, wherein the nitrile rubber obtained is subsequently subjected (i) either only to a metathesis reaction or (ii) to a metathesis reaction and a subsequent hydrogenation or (iii) only to a hydrogenation.

**18.** Optionally hydrogenated nitrile rubbers obtainable by the process according to Claim 17.

**19.** Use of the nitrile rubbers according to one or more of Claims 1 to 8 or according to Claim 18 for producing vulcanizable mixtures.

**20.** Vulcanizable mixture containing at least one nitrile rubber according to one or more of Claims 1 to 8 or according to Claim 18, at least one crosslinker and optionally further additives.

**21.** Process for producing a vulcanizable mixture according to Claim 20 by mixing at least one nitrile rubber according to one or more of Claims 1 to 8 or according to Claim 18, at least one crosslinker and optionally further additives.

**22.** Process for producing mouldings based on a nitrile rubber according to one or more of Claims 1 to 8 or according to Claim 18, wherein a vulcanizable mixture according to Claim 20 is vulcanized in a shaping process, preferably using an injection moulding process.

**23.** Moulding obtainable by the process according to Claim 22.

**24.** Moulding according to Claim 23, **characterized in that** it is a seal, a cap, a hose or a diaphragm, in particular an O-ring seal, a flat seal, a corrugated sealing ring, a sealing sleeve, a sealing cap, a dust protection cap, a plug seal, a thermal insulation hose (with or without addition of PVC), an oil cooler hose, an air intake hose, a servo control

hose or a pump diaphragm.

## Revendications

1. Caoutchouc nitrile, qui contient des unités de répétition d'au moins un nitrile α,β-insaturé, d'au moins un diène conjugué et éventuellement d'un ou de plusieurs autres monomères copolymérisables, et qui

   (i) présente une teneur en calcium d'au moins 150 ppm, par rapport au caoutchouc nitrile, et une teneur en chlore d'au moins 40 ppm, par rapport au caoutchouc nitrile, et
   (ii) contient des groupes terminaux 2,2,4,6,6-pentaméthylheptane-4-thio et/ou 2,4,4,6,6-pentaméthylheptane-2-thio et/ou 2,3,4,6,6-pentaméthylheptane-2-thio et/ou 2,3,4,6,6-pentaméthylheptane-3-thio.

2. Caoutchouc nitrile selon la revendication 1, qui présente une teneur en calcium d'au moins 200 ppm, de préférence d'au moins 400 ppm, de manière particulièrement préférée de plus de 500 ppm, notamment d'au moins 600 ppm et de manière particulièrement préférée d'au moins 800 ppm de calcium, par rapport au caoutchouc nitrile.

3. Caoutchouc nitrile selon la revendication 1 ou 2, qui présente une stabilité au stockage LS d'au plus 5 unités Mooney, de préférence de moins de 5 unités Mooney et de manière particulièrement préférée d'au plus 4 unités Mooney, la stabilité au stockage LS étant donnée par la formule (I) suivante :

$$LS = MV2 - MV1 \qquad (I)$$

   dans laquelle

   MV1 représente la valeur de la viscosité de Mooney du caoutchouc nitrile et
   MV2 représente la valeur de la viscosité de Mooney du même caoutchouc nitrile après un stockage de 48 heures à 100 °C.

4. Caoutchouc nitrile selon une ou plusieurs des revendications 1 à 3, qui contient des unités de répétition d'acrylonitrile, de 1,3-butadiène et éventuellement d'un ou de plusieurs autres monomères copolymérisables.

5. Caoutchouc nitrile selon la revendication 4, qui comporte des unités de répétition d'un ou de plusieurs acides mono- ou dicarboxyliques α,β-insaturés, leurs esters ou amides, de préférence des unités de répétition d'un ester alkylique d'un acide carboxylique α,β-insaturé, notamment de (méth)acrylate de méthyle, de (méth)acrylate d'éthyle, de (méth)acrylate de propyle, de (méth)acrylate de n-butyle, de (méth)acrylate de t-butyle, de (méth)acrylate d'hexyle, de (méth)acrylate de 2-éthylhexyle, de (méth)acrylate d'octyle ou de (méth)acrylate de lauryle.

6. Caoutchouc nitrile selon une ou plusieurs des revendications 1 à 5, qui présente une viscosité de Mooney MV1 (ML (1+4 @ 100 °C)) de 10 à 150, de préférence de 20 à 100 unités Mooney.

7. Caoutchouc nitrile selon une ou plusieurs des revendications 1 à 6, ayant une température de transition vitreuse dans la plage allant de -70 °C à +10 °C, de préférence dans la plage allant de -60 °C à 0 °C.

8. Caoutchouc nitrile selon une ou plusieurs des revendications 1 à 7, qui comporte des groupes terminaux 2,2,4,6,6-pentaméthylheptane-4-thio, 2,4,4,6,6-pentaméthylheptane-2-thio, 2,3,4,6,6-pentaméthylheptane-2-thio et 2,3,4,6,6-pentaméthylheptane-3-thio.

9. Procédé de fabrication d'un caoutchouc nitrile selon une ou plusieurs des revendications 1 à 8 par polymérisation en émulsion d'au moins un nitrile α,β-insaturé, d'au moins un diène conjugué et éventuellement d'un ou de plusieurs autres monomères copolymérisables, le latex contenant le caoutchouc nitrile qui se forme tout d'abord lors de la polymérisation étant soumis à une coagulation et le caoutchouc nitrile coagulé étant ensuite lavé, **caractérisé en ce que**

   (i) la polymérisation en émulsion est réalisée en présence d'un mélange contenant du 2,2,4,6,6-pentaméthylheptanethiol-4, du 2,4,4,6,6-pentaméthylheptanethiol-2, du 2,3,4,6,6-pentaméthylheptanethiol-2 et du

2,3,4,6,6-pentaméthylheptanethiol-3,
(ii) le latex contenant le caoutchouc nitrile qui se forme par la polymérisation est soumis à une coagulation en utilisant au moins un sel choisi dans le groupe constitué par les sels d'aluminium, de calcium, de magnésium, de sodium, de potassium et de lithium,
(iii) un sel de calcium soluble dans l'eau est présent lors de la coagulation et/ou le lavage du caoutchouc nitrile coagulé est réalisé avec de l'eau contenant des ions calcium et
(iv) un sel à base d'un chlorure est présent lors de la polymérisation en émulsion, lors de la coagulation ou lors du lavage ultérieur du caoutchouc nitrile coagulé.

**10.** Procédé selon la revendication 9, dans lequel la polymérisation en émulsion est réalisée de manière discontinue ou continue dans une cascade de cuves agitées.

**11.** Procédé selon la revendication 9 ou 10, dans lequel un ou plusieurs agents antivieillissement, de préférence agents antivieillissement phénoliques, sont ajoutés au latex contenant le caoutchouc nitrile avant ou pendant la coagulation.

**12.** Procédé selon une ou plusieurs des revendications 9 à 11, dans lequel du chlorure de sodium, du chlorure de potassium, du chlorure de calcium, du chlorure de magnésium, du nitrate de sodium, du nitrate de potassium, du sulfate de sodium, du sulfate de potassium, de l'hydrogénocarbonate de sodium, de l'hydrogénocarbonate de potassium, du carbonate de sodium, du carbonate de potassium, du sulfate d'aluminium, du sulfate d'aluminium et de potassium (alun de potassium), du sulfate d'aluminium et de sodium (alun de sodium), de l'acétate de sodium, de l'acétate de calcium ou du formiate de calcium est utilisé pour la coagulation du latex.

**13.** Procédé selon une ou plusieurs des revendications 9 à 12, dans lequel la quantité du ou des sels utilisée au total pour la coagulation du latex est de 0,5 à 200 parties en poids, de préférence de 0,8 à 80 parties en poids et de manière particulièrement préférée de 1 à 50 parties en poids, par rapport à 100 parties en poids de caoutchouc nitrile.

**14.** Procédé selon une ou plusieurs des revendications 9 à 13, dans lequel le latex utilisé pour la coagulation présente une concentration en solides dans la plage allant de 1 % à 40 %, de préférence dans la plage allant de 5 % à 35 % et de manière particulièrement préférée dans la plage allant de 15 à 30 % en poids.

**15.** Procédé selon une ou plusieurs des revendications 9 à 14, dans lequel la coagulation du latex est réalisée à une température dans la plage allant de 10 à 100 °C, de manière particulièrement préférée dans la plage allant de 20 à 90 °C.

**16.** Procédé selon une ou plusieurs des revendications 9 à 15, dans lequel le lavage du caoutchouc nitrile coagulé est réalisé à une température dans la plage allant de 15 à 90 °C et de préférence à une température dans la plage allant de 20 à 80 °C.

**17.** Procédé selon une ou plusieurs des revendications 9 à 16, dans lequel le caoutchouc nitrile obtenu est ensuite soumis à (i) uniquement une réaction de métathèse ou (ii) une réaction de métathèse et une hydrogénation ultérieure ou (iii) uniquement une hydrogénation.

**18.** Caoutchoucs nitriles éventuellement hydrogénés pouvant être obtenus par le procédé selon la revendication 17.

**19.** Utilisation des caoutchoucs nitriles selon une ou plusieurs des revendications 1 à 8 ou selon la revendication 18 pour la fabrication de mélanges vulcanisables.

**20.** Mélange vulcanisable contenant au moins un caoutchouc nitrile selon une ou plusieurs des revendications 1 à 8 ou selon la revendication 18, au moins un agent de réticulation et éventuellement des additifs supplémentaires.

**21.** Procédé de fabrication d'un mélange vulcanisable selon la revendication 20, dans lequel au moins un caoutchouc nitrile selon une ou plusieurs des revendications 1 à 8 ou selon la revendication 18, au moins un agent de réticulation et éventuellement des additifs supplémentaires sont mélangés.

**22.** Procédé de fabrication de pièces moulées à base d'un caoutchouc nitrile selon une ou plusieurs des revendications 1 à 8 ou selon la revendication 18, dans lequel un mélange vulcanisable selon la revendication 20 est vulcanisé dans le cadre d'un procédé de façonnage, de préférence en utilisant un procédé de moulage par injection.

**23.** Pièce moulée pouvant être obtenue par le procédé selon la revendication 22.

**24.** Pièce moulée selon la revendication 23, **caractérisée en ce qu'**il s'agit d'un joint, d'un capuchon, d'un tuyau ou d'une membrane, notamment d'un joint torique, d'un joint plat, d'un joint d'étanchéité tournant, d'une manchette d'étanchéité, d'un capuchon d'étanchéité, d'un capuchon de protection contre la poussière, d'un joint de connecteur, d'un tuyau à isolation thermique (avec et sans ajout de PVC), d'un tuyau refroidisseur d'huile, d'un tuyau d'aspiration d'air, d'un tuyau de servo-direction ou d'une membrane de pompe.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 75105746 B
- JP 7626790 A
- DD 154702
- JP 2790273 A
- WO 6932322 A
- DE OS2332096 A
- DE OS2425441 A
- DE OS2751786 A
- DE OS3043688 A
- US 4920176 A
- EP 1369436 A
- EP 0692496 A
- EP 0779301 A
- EP 0779300 A
- EP 779300 A
- US 4826721 A
- WO 02100941 A
- WO 02100905 A
- US 3700637 A
- DE 2539132 A
- EP 0134023 A
- DE OS3541689 A
- DE OS3540918 A
- EP 0298386 A
- DE OS3529252 A
- DE OS3433392 A
- US 4464515 A
- US 4503196 A
- EP 0471250 A
- US 4631315 A
- US 6683136 A


### In der Beschreibung aufgeführte Nicht-Patentliteratur


- **W. Hofmann.** *Rubber Chem. Technol.,* 1963, vol. 36, 1
- Ullmann's Encyclopedia of Industrial Chemistry. VCH Verlagsgesellschaft, 1993, 255-261
- *Angew. Makromol. Chem.,* 1986, vol. 145-146, 161-179
- *Kolloid-Z.,* 1957, vol. 154, 154
- **Houben -Weyl.** Methoden der Org. Chemie. *Makromolekulare Stoffe,* 1961, vol. 1, 484
- **Houben-Weyl.** Methoden der Org. Chemie. *Makromolekulare Stoffe,* 1961, vol. 1, 479
- **Houben-Weyl.** Methoden der Org. Chemie. *Makromolekulare Stoffe,* 1961, vol. 1, 484, 485
- **B. Welz.** Atomic Absorption Spectrometry. Verlag Chemie, 1985
- Ullmann's Encyclopedia of Industrial Chemistry. vol. 31, 345-355
- Ullmann's Encyclopedia of Industrial Chemistry. vol. 13, 75-108